# EUROPEAN PATENT APPLICATION

(11) **EP 2 792 905 A1**
(43) Date of publication of application: **22.10.2014**
(21) Application number: 11877333.2
(22) Date of filing: 15.12.2011
(51) Int. Cl.: F16H 3/66

(54) **AUTOMATIC TRANSMISSION FOR VEHICLE**

(71) Applicant: TOYOTA JIDOSHA KABUSHIKI KAISHA, Toyota-shi, Aichi-ken, 471-8571 (JP); Aisin Aw Co., Ltd., Aichi 444-1192 (JP)
(72) Inventor: OITA Shinji, Toyota-shi, Aichi-ken, 471-8571 (JP); MORISE Masaru, Toyota-shi, Aichi-ken, 471-8571 (JP); OTAKE Masahiro, Anjo-shi Aichi 444-1192 (JP); SOUDA TORU, Anjo-shi Aichi 444-1192 (JP); KATO Hiroshi, Anjo-shi Aichi 444-1192 (JP); KASUYA Satoru, Anjo-shi Aichi 444-1192 (JP); IKE Nobukazu, Anjo-shi Aichi 444-1192 (JP); SEKI Yuichi, Anjo-shi Aichi 444-1192 (JP)
(74) Representative: Kuhnen & Wacker
(86) International application number: PCT/JP2011/079110
(87) International publication number: WO 2013/088568

(57) **Abstract**

Provided is an automatic transmission for a vehicle for which the processing is simple during the manufacturing stage. Clutches (C1-C6) do not include an object (a brake) that, by means of engagement, directly connects with the sun gears (S), carriers (CA), and ring gears (R) of planetary gear devices (22, 24, 26), which are elements that rotate with respect to a transmission case (28); in addition, all of the multiple gear ranges that can be established with an automatic transmission (10) and the like by means of the combinations of engagements and disengagements of the multiple clutches (C1-C6) can be established selectively. Therefore, manufacturing by means of simple processing is possible, without the necessity of forming a brake groove on the inner-circumferential side of the transmission case (28). In other words, it is possible to provide an automatic transmission (10) for a vehicle for which the processing is simple during the manufacturing stage.

## Description

### TECHNICAL FIELD

The present invention relates to a vehicle automatic transmission and particularly to an improvement for simplifying processing in a manufacturing stage.

### BACKGROUND ART

In various vehicles, a multistage automatic transmission is widely used that includes a plurality of engagement devices and that selectively establishes a plurality of shift stages depending on a combination of engagement and release of the plurality of the engagement devices. The engagement devices are implemented by using hydraulic friction engagement devices switched between engagement and release depending on an oil pressure etc., and various configurations have been proposed. For example, an automatic transmission described in Patent Document 1 includes three planetary gear devices and six engagement devices and has any one of first to seventh shift stages selectively established by the engagement of three engagement devices of the six engagement devices and the release of the remaining engagement devices. An automatic transmission described in Patent Document 2 includes three planetary gear devices and six engagement devices and has any one of first to eighth shift stages selectively established by the engagement of two engagement devices of the six engagement devices and the release of the remaining engagement devices. An automatic transmission described in Patent Document 3 includes four planetary gear devices and six engagement devices and has any one of first to tenth shift stages selectively established by the engagement of four engagement devices of the six engagement devices and the release of the remaining engagement devices.

### PRIOR ART DOCUMENTS

### Patent Documents

Patent Document 1: Japanese Laid-Open Patent Publication No. 2011-017372
Patent Document 2: Japanese Laid-Open Patent Publication No. 2003-130152
Patent Document 3: U.S. Unexamined Patent Application Publication No. 2009/0192009

### SUMMARY OF THE INVENTION

### Problem to Be Solved by the Invention

Although the conventional automatic transmission includes, as the engagement devices, clutches disposed between and selectively coupling rotating elements disposed rotatably relative to a non-rotating member, and brakes disposed between the non-rotating member and the rotating elements and selectively coupling the non-rotating member to the respective rotating elements, the disposition of the brakes requires brake grooves formed on the inner circumferential side of, for example, a transmission case (housing) that is a non-rotating member. As a result of intensive continuous study for simplifying the processing in the manufacturing stage of the vehicle automatic transmission, the present inventers conceived the present invention.

The present invention was conceived in view of the situations and it is therefore an object of the present invention to provide a vehicle automatic transmission capable of simplifying the processing in the manufacturing stage.

### Means for Solving the Problem

To achieve the object, the first aspect of the invention provides a vehicle automatic transmission comprising: a plurality of rotating elements disposed rotatably relative to a transmission case; and a plurality of clutches each disposed between two rotating elements of the plurality of the rotating elements to be engaged to inhibit relative rotation between the two rotating elements and released to allow relative rotation between the two rotating elements, wherein the plurality of the clutches does not include those engaged to directly couple the rotating elements to the transmission case and selectively establishes all multiple shift stages achieved in the automatic transmission depending on a combination of engagement and release of the plurality of the clutches.

### Effects of the Invention

As described above, according to the first aspect of the invention, since the plurality of the clutches does not include those engaged to directly couple the rotating elements to the transmission case and selectively establishes all the multiple shift stages achieved in the automatic transmission depending on a combination of engagement and release of the plurality of the clutches, it is not necessary to form a brake groove on the inner circumferential side of the transmission case and the automatic transmission can be manufactured by simple processing. Therefore, the automatic transmission can be provided that can simplify the processing in the manufacturing stage.

The second aspect of the invention provides the vehicle automatic transmission recited in the first aspect of the invention, wherein each of the multiple shift stages is established by releasing two clutches of the plurality of the clutches. Consequently, the processing in the manufacturing stage can be simplified and the clutches released at the time of establishment of the shift stages can be reduced as small as possible to suppress dragging.

The third aspect of the invention provides the vehicle automatic transmission recited in the second aspect of the invention, wherein the shift stages are switched by engaging one clutch of the two clutches and releasing one clutch other than the two clutches. Consequently, the automatic transmission in a practical form performing a so-called clutch-to-clutch shift can be manufactured by simple processing.

The fourth aspect of the invention provides the vehicle automatic transmission recited in the second or third aspect of the invention, comprising three planetary gear devices and the six clutches, wherein the plurality of the rotating elements is configured to include sun gears, carriers, and ring gears of the three respective planetary gear devices, and wherein each of the multiple shift stages is established by engaging four clutches of the six clutches and releasing the remaining two clutches. Consequently, the automatic transmission in a practical form can be manufactured by simple processing.

The fifth aspect of the invention provides the vehicle automatic transmission recited in the fourth aspect of the invention depending on the second or third aspect of the invention, comprising a first planetary gear device, a second planetary gear device, and a third planetary gear device that are all of a single pinion type, a first clutch selectively coupling an input rotating element to the carrier of the second planetary gear device, a second clutch selectively coupling the ring gear of the first planetary gear device to the sun gear of the second planetary gear device and the carrier of the third planetary gear device coupled to each other, a third clutch selectively coupling the carrier of the first planetary gear device to the carrier of the second planetary gear device, a fourth clutch selectively coupling the ring gear of the first planetary gear device to the ring gear of the third planetary gear device, a fifth clutch selectively coupling the carrier of the first planetary gear device to the ring gear of the third planetary gear device, a sixth clutch selectively coupling the input rotating element to the sun gear of the third planetary gear device, and an output rotation element coupled to the ring gear of the second planetary gear device, and wherein the sun gear of the first planetary gear device is coupled to the transmission case. Consequently, the automatic transmission in a practical form can be manufactured by simple processing.

The sixth aspect of the invention provides the vehicle automatic transmission recited in the fourth aspect of the invention depending on the second or third aspect of the invention, comprising a first planetary gear device of a single pinion type, a second planetary gear device of the single pinion type, and a third planetary gear device of a double pinion type, a first clutch selectively coupling an input rotating element to the carrier of the first planetary gear device, a second clutch selectively coupling the carrier of the first planetary gear device to the ring gear of the third planetary gear device, a third clutch selectively coupling the ring gear of the second planetary gear device to the ring gear of the third planetary gear device, a fourth clutch selectively coupling the ring gear of the second planetary gear device to the sun gear of the third planetary gear device, a fifth clutch selectively coupling the sun gear of the first planetary gear device and the carrier of the second planetary gear device coupled to each other to the sun gear of the third planetary gear device, a sixth clutch selectively coupling the input rotating element to the sun gear of the second planetary gear device, and an output rotating element coupled to the ring gear of the first planetary gear device, and wherein the carrier of the third planetary gear device is coupled to the transmission case. Consequently, the automatic transmission in a practical form can be manufactured by simple processing.

The seventh aspect of the invention provides the vehicle automatic transmission recited in the fourth aspect of the invention depending on the second or third aspect of the invention, comprising a first planetary gear device of a single pinion type, a second planetary gear device of the single pinion type, and a third planetary gear device of a double pinion type, a first clutch selectively coupling an input rotating element to the carrier of the first planetary gear device, a second clutch selectively coupling the carrier of the first planetary gear device to the carrier of the second planetary gear device, a third clutch selectively coupling the sun gear of the first planetary gear device and the ring gear of the third planetary gear device coupled to each other to the ring gear of the second planetary gear device, a fourth clutch selectively coupling the ring gear of the second planetary gear device to the sun gear of the third planetary gear device, a fifth clutch selectively coupling the carrier of the second planetary gear device to the sun gear of the third planetary gear device, a sixth clutch selectively coupling the input rotating element to the carrier of the third planetary gear device, and an output rotating element coupled to the ring gear of the first planetary gear device, and wherein the sun gear of the second planetary gear device is coupled to the transmission case. Consequently, the automatic transmission in a practical form can be manufactured by simple processing.

The eighth aspect of the invention provides the vehicle automatic transmission recited in the first aspect of the invention, comprising a plurality of planetary gear devices, and wherein sun gears, carriers, and ring gears of the planetary gear devices independently make up the respective rotating elements. Consequently, the automatic transmission in a practical form can be manufactured by simple processing.

The ninth aspect of the invention provides the vehicle automatic transmission recited in the fourth aspect of the invention depending on the second or third aspect of the invention, or the eighth aspect of the invention, comprising a first planetary gear device, a second planetary gear device, and a third planetary gear device that are all of a single pinion type, an input rotating element coupled to the sun gear of the second planetary gear device, a first clutch selectively coupling the ring gear of the first planetary gear device to the ring gear of the second planetary gear device, a second clutch selectively coupling the carrier of the first planetary gear device to the ring gear of the second planetary gear device, a third clutch selectively coupling the ring gear of the first planetary gear device to the sun gear of the third planetary gear device, a fourth clutch selectively coupling the carrier of the first planetary gear device to the carrier of the third planetary gear device, a fifth clutch selectively coupling the carrier of the second planetary gear device to the sun gear of the third planetary gear device, a sixth clutch selectively coupling the input rotating element to the carrier of the third planetary gear device, and an output rotating element coupled to the ring gear of the third planetary gear device, and wherein the sun gear of the first planetary gear device is coupled to the transmission case. Consequently, the automatic transmission in a practical form can be manufactured by simple processing.

The tenth aspect of the invention provides the vehicle automatic transmission recited in the fourth aspect of the invention depending on the second or third aspect of the invention, or the eighth aspect of the invention, comprising a first planetary gear device of a single pinion type, a second planetary gear device of the single pinion type, and a third planetary gear device of a double pinion type, a first clutch selectively coupling an input rotating element to the carrier of the first planetary gear device, a second clutch selectively coupling the carrier of the first planetary gear device to the carrier of the second planetary gear device, a third clutch selectively coupling the sun gear of the first planetary gear device to the ring gear of the second planetary gear device, a fourth clutch selectively coupling the sun gear of the first planetary gear device to the ring gear of the third planetary gear device, a fifth clutch selectively coupling the ring gear of the second planetary gear device to the sun gear of the third planetary gear device, a sixth clutch selectively coupling the carrier of the second planetary gear device to the sun gear of the third planetary gear device, and an output rotating element coupled to the ring gear of the first planetary gear device, and wherein the sun gear of the second planetary gear device is coupled to the transmission case. Consequently, the automatic transmission in a practical form can be manufactured by simple processing.

The eleventh aspect of the invention provides the vehicle automatic transmission recited in the first aspect of the invention, comprising a first planetary gear device of a double pinion type and a second planetary gear device of a single pinion type, a first clutch selectively coupling an input rotating element to a carrier of the first planetary gear device, a second clutch selectively coupling the input rotating element to a sun gear of the first planetary gear device and a sun gear of the second planetary gear device coupled to each other, a third clutch selectively coupling the carrier of the first planetary gear device to a ring gear of the second planetary gear device, a fourth clutch selectively coupling the sun gear of the first planetary gear device and the sun gear of the second planetary gear device coupled to each other to the ring gear of the second planetary gear device, and an output rotating element coupled to a ring gear of the first planetary gear device, and wherein a carrier of the second planetary gear device is coupled to the transmission case. Consequently, the automatic transmission in a practical form can be manufactured by simple processing.

### BRIEF DESCRIPTION OF THE DRAWINGS

Fig. 1 is a schematic for explaining a configuration of a vehicle automatic transmission that is an embodiment of the present invention.
Fig. 2 is an operation table for explaining an operation state of engagement elements when a plurality of shift stages is selectively established in the automatic transmission of Fig. 1.
Fig. 3 is a collinear diagram capable of representing on straight lines relative relationships of rotation speeds of the rotating elements having a different coupling state for each shift stage in the automatic transmission of Fig. 1.
Fig. 4 is a schematic for explaining a configuration of a vehicle automatic transmission that is another embodiment of the present invention.
Fig. 5 is an operation table for explaining an operation state of engagement elements when a plurality of shift stages is selectively established in the automatic transmission of Fig. 4.
Fig. 6 is a collinear diagram capable of representing on straight lines relative relationships of rotation speeds of the rotating elements having a different coupling state for each shift stage in the automatic transmission of Fig. 4.
Fig. 7 is a schematic for explaining a configuration of a vehicle automatic transmission that is further another embodiment of the present invention.
Fig. 8 is an operation table for explaining an operation state of engagement elements when a plurality of shift stages is selectively established in the automatic transmission of Fig. 7.
Fig. 9 is a collinear diagram capable of representing on straight lines relative relationships of rotation speeds of the rotating elements having a different coupling state for each shift stage in the automatic transmission of Fig. 7.
Fig. 10 is a schematic for explaining a configuration of a vehicle automatic transmission that is yet another embodiment of the present invention.
Fig. 11 is an operation table for explaining an operation state of engagement elements when a plurality of shift stages is selectively established in the automatic transmission of Fig. 10.
Fig. 12 is a collinear diagram capable of representing on straight lines relative relationships of rotation speeds of the rotating elements having a different coupling state for each shift stage in the automatic transmission of Fig. 10.
Fig. 13 is a schematic for explaining a configuration of a vehicle automatic transmission that is further another embodiment of the present invention.
Fig. 14 is an operation table for explaining an operation state of engagement elements when a plurality of shift stages is selectively established in the automatic transmission of Fig. 13.
Fig. 15 is a collinear diagram capable of representing on straight lines relative relationships of rotation speeds of the rotating elements having a different coupling state for each shift stage in the automatic transmission of Fig. 13.
Fig. 16 is a schematic for explaining a configuration of a vehicle automatic transmission that is yet another embodiment of the present invention.
Fig. 17 is an operation table for explaining an operation state of engagement elements when a plurality of shift stages is selectively established in the automatic transmission of Fig. 16.
Fig. 18 is a collinear diagram capable of representing on straight lines relative relationships of rotation speeds of the rotating elements having a different coupling state for each shift stage in the automatic transmission of Fig. 16.

### MODES FOR CARRYING OUT THE INVENTION

A vehicle automatic transmission of the present invention is preferably a stepped automatic transmission disposed in a power transmission path between a torque converter coupled to an engine acting as a drive force source for running and drive wheels. Preferably, the clutches are hydraulic friction engagement devices such as wet multi-plate type clutches in which a plurality of friction plates overlapped with each other is pressed by a hydraulic actuator, and are controlled to be engaged or released depending on an oil pressure supplied from a hydraulic control circuit. The clutches may not necessarily be of the wet type, and dry clutches or meshing clutches are also preferably applicable.

When it is described that the plurality of the clutches does not include those engaged to directly couple the rotating elements to the transmission case, this means the exclusion of a so-called brake engaged to directly couple a rotating element to the inner circumferential side of the transmission case. Therefore, the vehicle automatic transmission of the present invention selectively establishes all the multiple shift stages achievable in the automatic transmission depending on a combination of engagement and release of only so-called clutches.

Preferably, the vehicle automatic transmission of the present invention is an automatic transmission of a type including three planetary gear devices and using six clutches to mutually engage or release a plurality of rotating elements including sun gears, carriers, and ring gears of the respective planetary gear devices and is an automatic transmission selectively establishing eight forward speeds and one reverse speed through the engagement of four clutches and the release of two clutches out of the six clutches.

Preferably, the three planetary gear devices have gear ratios (numbers of gear teeth) of the planetary gear devices equal to each other. This configuration advantageously enables the standardization of planetary gear devices used in the vehicle automatic transmission and the realization of gear ratios in a practical form in terms of gear ratios of the shift stages in the vehicle automatic transmission.

When it is described that the sun gears, the carriers, and the ring gears of the plurality of the planetary gear devices independently make up the respective rotating elements, this means that the sun gears, the carriers, and the ring gears are not coupled to each other. In other words, while each of the multiple clutches disposed on the automatic transmission is released, the sun gears, the carriers, and the ring gears are relatively rotatable independently of each other.

A preferred embodiment of the present invention will now be described in detail with reference to the drawings.

### First Embodiment

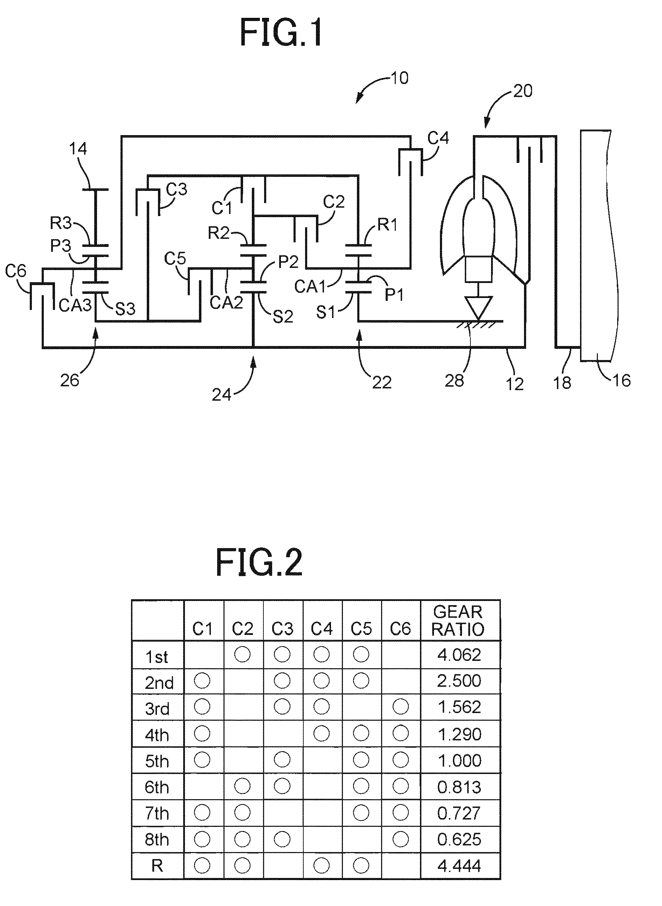

Fig. 1 is a schematic for explaining a configuration of a vehicle automatic transmission 10 that is an embodiment of the present invention. In the drawings used in the following description, portions are not necessarily precisely depicted in terms of dimension ratio etc. As depicted in Fig. 1, the automatic transmission 10 of this embodiment is a transversally mounted device preferably used in, for example, an FF (front-engine front-drive) vehicle and changes speed of rotation of an input shaft 12 that is an input rotating element to output the rotation from an output gear 14 that is an output rotating element. The input shaft 12 is coupled to a turbine shaft of a torque converter 20 and a drive force output from a crankshaft 18 of an engine 16 acting as a drive force source for running is input via the torque converter 20 to the input shaft 12. The drive force output from the output gear 14 is transmitted via a differential gear device and axles etc. not depicted to a pair of left and right drive wheels not depicted. The automatic transmission 10 is substantially symmetrically configured relative to a center line and the lower half from the center line is not depicted in Fig. 1. The same applies to the following embodiments.

The automatic transmission 10 is made up of a single pinion type first planetary gear device 22 having a predetermined gear ratio ρ1 of, for example, about "0.6", a single pinion type second planetary gear device 24 having a predetermined gear ratio p2 of, for example, about "0.6", and a single pinion type third planetary gear device 26 having a predetermined gear ratio p3 of, for example, about "0.6", disposed on a common center axis in a transmission case 28 that is a non-rotating member attached to a vehicle body. Therefore, the first planetary gear device 22, the second planetary gear device 24, and the third planetary gear device 26 (hereinafter referred to as planetary gear devices 22, 24, and 26 if not particularly distinguished) included in the automatic transmission 10 have the gear ratios equal to each other.

The first planetary gear device 22 includes a sun gear S 1, a plurality of pinion gears P1, a carrier CA1 supporting the pinion gears P1 in a rotatable and revolvable manner, and a ring gear R1 meshed with the sun gear S1 via the pinion gears P1 as rotating elements (rotating members). The second planetary gear device 24 includes a sun gear S2, a plurality of pinion gears P2, a carrier CA2 supporting the pinion gears P2 in a rotatable and revolvable manner, and a ring gear R2 meshed with the sun gear S2 via the pinion gears P2 as rotating elements. The third planetary gear device 26 includes a sun gear S3, a plurality of pinion gears P3, a carrier CA3 supporting the pinion gears P3 in a rotatable and revolvable manner, and a ring gear R3 meshed with the sun gear S3 via the pinion gears P3 as rotating elements.

In the automatic transmission 10, the sun gear S1 of the first planetary gear device 22 is coupled to the transmission case 28 that is the non-rotating member. The sun gear S2 of the second planetary gear device 24 is coupled to the input shaft 12 that is the input rotating element. The ring gear R3 of the third planetary gear device 26 is coupled to the output gear 14 that is the output rotating element. The sun gears S1, S2, S3 (hereinafter referred to as sun gears S if not particularly distinguished), the carriers CA1, CA2, CA3 (hereinafter referred to as carriers CA if not particularly distinguished), and the ring gears R1, R2, R3 (hereinafter referred to as ring gears R if not particularly distinguished) in the three planetary gear devices 22, 24, and 26 are disposed rotatably relative to each other while clutches C1 to C6 described later are released. In other words, the sun gears S, the carriers CA, and the ring gears R are disposed as respective individual members not coupled to each other. Therefore, in the automatic transmission 10 of this embodiment, the sun gears S, the carriers CA, and the ring gears R in the planetary gear devices 22, 24, and 26 correspond to a plurality of rotating elements disposed rotatably relative to the transmission case 28 independently of each other.

The automatic transmission 10 includes a first clutch C1, a second clutch C2, a third clutch C3, a fourth clutch C4, a fifth clutch C5, and a sixth clutch C6 (hereinafter referred to as clutches C if not particularly distinguished) as a plurality of clutches each disposed between two rotating elements of the plurality of the rotating elements, i.e., the sun gears S, the carriers CA, and the ring gears R in the planetary gear devices 22,24, and 26 to be engaged to inhibit relative rotation between the rotating elements and released to allow relative rotation between the rotating elements. All of these clutches C are preferably hydraulic friction engagement devices acting as engagement elements frequently used in a conventional vehicle automatic transmission and, for example, wet multi-plate type clutches in which a plurality of friction plates overlapped with each other is pressed by a hydraulic actuator and have an engagement state switched by supplied hydraulic pressure according to excitation/non-excitation and current control of a linear solenoid valve included in a hydraulic control circuit not depicted. The clutches C may not necessarily be wet clutches and dry clutches or meshing clutches (dog clutches) etc. are also preferably applicable. Therefore, the automatic transmission 10 is configured such that an engaged state (power transmission state) inhibiting relative rotation of a pair of corresponding rotating elements and a released state (power interruption state) allowing relative rotation between the rotating elements are switched using clutches C depending on an oil pressure supplied from the hydraulic control circuit.

Each of the clutches C is disposed between rotating elements disposed rotatably relative to the transmission case 28. In other words, the automatic transmission 10 is not disposed with a so-called brake engaged to directly couple the rotating element to the transmission case 28, such as a hydraulic friction engagement device having a plurality of friction plates fitted to brake grooves formed on the inner circumferential side etc. of the transmission case 28 or a so-called brake is not involved with at least a shift in the automatic transmission 10. Therefore, the automatic transmission 10 selectively establishes all the achievable shift stages, with only the plurality of the clutches C selectively coupling the rotating elements disposed rotatably relative to the transmission case 28.

In particular, in the automatic transmission 10, the first clutch C1 selectively coupling the ring gear R1 of the first planetary gear device 22 and the ring gear R2 of the second planetary gear device 24 is disposed between the ring gear R1 and the ring gear R2. The second clutch C2 selectively coupling the carrier CA1 of the first planetary gear device 22 and the ring gear R2 of the second planetary gear device 24 is disposed between the carrier CA1 and the ring gear R2. The third clutch C3 selectively coupling the ring gear R1 of the first planetary gear device 22 and the sun gear S3 of the third planetary gear device 26 is disposed between the ring gear R1 and the sun gear S3. The fourth clutch C4 selectively coupling the carrier CA1 of the first planetary gear device 22 and the carrier CA3 of the third planetary gear device 26 is disposed between the carrier CA1 and the carrier CA3. The fifth clutch C5 selectively coupling the carrier CA2 of the second planetary gear device 24 and the sun gear S3 of the third planetary gear device 26 is disposed between the carrier CA2 and the sun gear S3. The sixth clutch C6 selectively coupling the input shaft 12 that is the input rotating element and the carrier CA3 of the third planetary gear device 26 is disposed between the input shaft 12 and the carrier CA3.

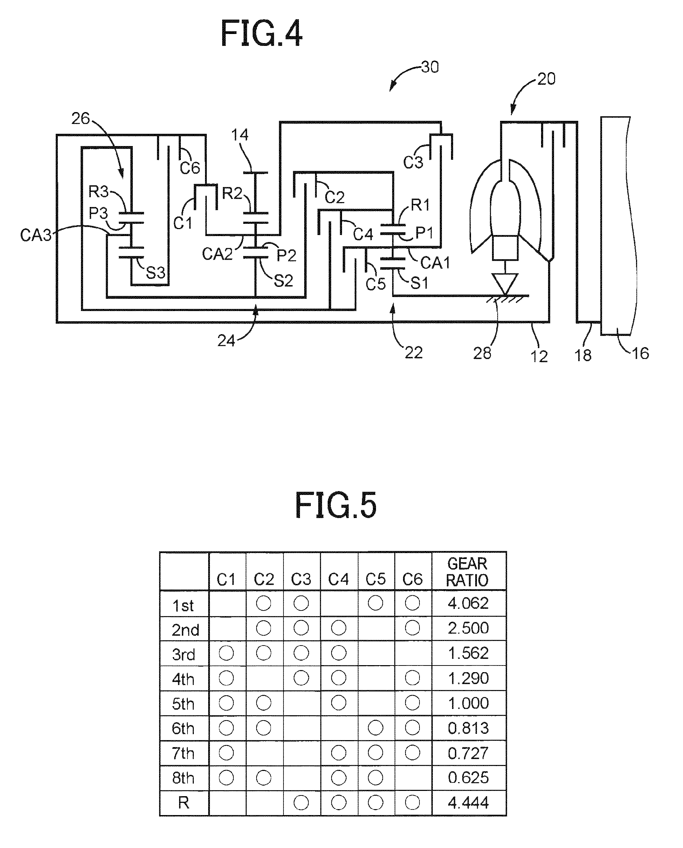

Fig. 2 is an operation table for explaining an operation state of engagement elements when a plurality of shift stages is selectively established in the automatic transmission 10. The operation table of Fig. 2 summarizes the relationship between the shift stages established in the automatic transmission 10 and the operation state of the clutches C with "circles" indicative of engagement and blanks indicative of release. The same applies to the following description of Fig. 5 etc. The automatic transmission 10 has eight forward shift stages from a first shift stage "1st" to an eighth shift stage "8th" and a reverse shift stage of a reverse shift stage "R" established depending on a combination of coupling states of the nine rotating elements included in the automatic transmission 10, i.e., the sun gears S1, S2, S3, the carriers CA1, CA2, CA3, and the ring gears R1, R2, R3 of the planetary gear devices 22, 24, and 26 in accordance with engagement and release of the clutches C1 to C6.

As depicted in Fig. 2, in the automatic transmission 10, the first shift stage "1st" with a gear ratio "4.062" is established by engagement of the second clutch C2, the third clutch C3, the fourth clutch C4, and the fifth clutch C5. The second shift stage "2nd" with a gear ratio "2.500" is established by engagement of the first clutch C1, the third clutch C3, the fourth clutch C4, and the fifth clutch C5. The third shift stage "3rd" with a gear ratio "1.562" is established by engagement of the first clutch C1, the third clutch C3, the fourth clutch C4, and the sixth clutch C6. The fourth shift stage "4th" with a gear ratio "1.290" is established by engagement of the first clutch C1, the fourth clutch C4, the fifth clutch C5, and the sixth clutch C6. The fifth shift stage "5th" with a gear ratio "1.000" is established by engagement of the first clutch C1, the third clutch C3, the fifth clutch C5, and the sixth clutch C6. The sixth shift stage "6th" with a gear ratio "0.813" is established by engagement of the second clutch C2, the third clutch C3, the fifth clutch C5, and the sixth clutch C6. The seventh shift stage "7th" with a gear ratio "0.727" is established by engagement of the first clutch C1, the second clutch C2, the fifth clutch C5, and the sixth clutch C6. The eighth shift stage "8th" with a gear ratio "0.625" is established by engagement of the first clutch C1, the second clutch C2, the third clutch C3, and the sixth clutch C6. The reverse shift stage "R" with a gear ratio "4.444" is established by engagement of the first clutch C1, the second clutch C2, the fourth clutch C4, and the fifth clutch C5. A neutral state is established by releasing all the clutches C.

In other words, in the automatic transmission 10, the first shift stage "1st" is established by release of the first clutch C1 and the sixth clutch C6. The second shift stage "2nd" is established by release of the second clutch C2 and the sixth clutch C6. The third shift stage "3rd" is established by release of the second clutch C2 and the fifth clutch C5. The fourth shift stage "4th" is established by release of the second clutch C2 and the third clutch C3. The fifth shift stage "5th" is established by release of the second clutch C2 and the fourth clutch C4. The sixth shift stage "6th" is established by release of the first clutch C1 and the fourth clutch C4. The seventh shift stage "7th" is established by release of the third clutch C3 and the fourth clutch C4. The eighth shift stage "8th" is established by release of the fourth clutch C4 and the fifth clutch C5. The reverse shift stage "R" is established by release of the third clutch C3 and the sixth clutch C6.

Therefore, in the automatic transmission 10, four clutches of the six clutches C1 to C6 are engaged and the remaining two clutches are released to selectively establish any of the eight forward shift stages from the first shift stage "1st" to the eighth shift stage "8th" and the reverse shift stage "R". In other words, the engagement elements involved with a shift of the automatic transmission 10 are all devices (clutches) engaged to inhibit relative rotation between the rotating elements and released to allow relative rotation between the rotating elements, do not include a device (brake) engaged to directly couple the rotating elements to the transmission case 28, and selectively establish all the multiple shift stages achievable in the automatic transmission 10, i.e., the eight forward shift stages from the first shift stage "1st" to the eighth shift stage "8th" and the reverse shift stage "R", depending on a combination of engagement and release of the six clutches C1 to C6.

As apparent from the engagement table of Fig. 2, a switchover of shift stages (single shift) in the automatic transmission 10 is performed by releasing one clutch of the four clutches engaged before the shift and engaging one clutch of the two clutches released before the shift. For example, the shift from the first shift stage to the second shift stage is performed by releasing the second clutch C2 and engaging the first clutch C1. Therefore, the automatic transmission 10 performs a so-called clutch-to-clutch shift by switching one clutch to be gripped, for a switchover of all the shift stages except a skip shift at least in the forward shift stages.

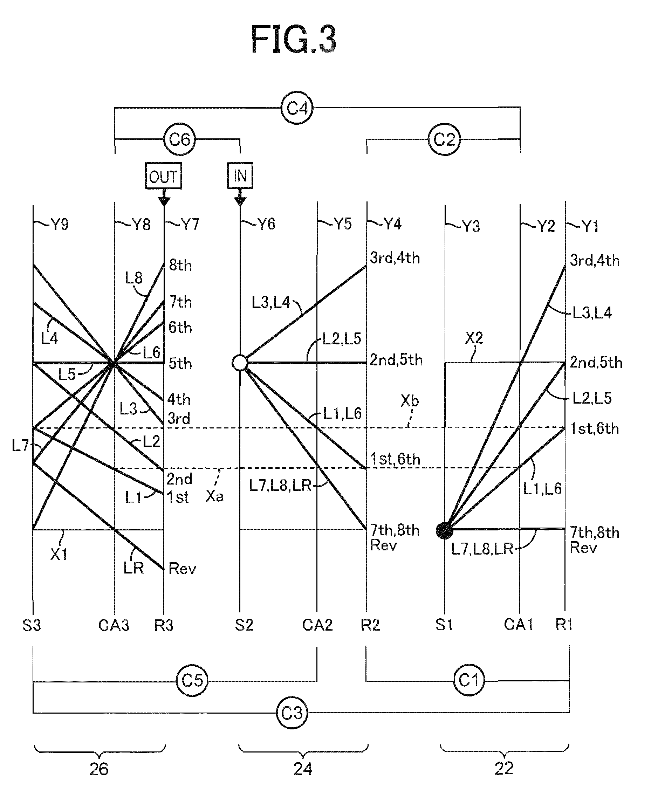

Fig. 3 is a collinear diagram capable of representing on straight lines relative relationships of rotation speeds of the rotating elements having a different coupling state for each shift stage in the automatic transmission 10. The collinear diagram of Fig. 3 has two-dimensional coordinates indicative of a relative relationship of the gear ratios p of the planetary gear devices 22, 24, and 26 in the horizontal axis direction and indicative of a relative rotation speed in the vertical axis direction. A horizontal line X1 indicates a zero rotation speed. A horizontal line X2 on the upper side indicates a rotation speed "1.0", i.e., a rotation speed N_{IN} of the input shaft 12. With regard to nine vertical lines Y1 to Y9, from right to left, Y1, Y2, Y3, Y4, Y5, Y6, Y7, Y8, and Y9 indicate relative rotation speeds of the ring gear R1, the carrier CA1, the sun gear S1 of the first planetary gear device 22, the ring gear R2, the carrier CA2, the sun gear S2 of the second planetary gear device 24, the ring gear R3, the carrier CA3, and the sun gear S3 of the third planetary gear device 26. The intervals between the vertical lines Y1 to Y9 are determined depending on the gear ratios ρ1, p2, and p3 of the planetary gear devices 22, 24, and 26. In particular, for respective sets of the vertical lines Y1 to Y3 corresponding to the three rotation elements in the first planetary gear device 22, the vertical lines Y4 to Y6 corresponding to the three rotation elements in the second planetary gear device 24, and the vertical lines Y7 to Y9 corresponding to the three rotation elements in the third planetary gear device 26, the interval corresponding to one is set between the sun gear S and the carrier CA, and the interval corresponding to p is set between the carrier CA and the ring gear R.

When the automatic transmission 10 is represented by using the collinear diagram of Fig. 3, the ring gear R1 is selectively coupled via the first clutch C1 to the ring gear R2 and is selectively coupled via the third clutch C3 to the sun gear S3. The carrier CA1 is selectively coupled via the second clutch C2 to the ring gear R2 and is selectively coupled via the fourth clutch C4 to the carrier CA3. The sun gear S1 is coupled to the transmission case 28 that is the non-rotating member. The carrier CA2 is selectively coupled via the fifth clutch C5 to the sun gear S3. The sun gear S2 is coupled to the input shaft 12 acting as the input rotating element and is selectively coupled via the sixth clutch C6 to the carrier CA3. The ring gear R3 is coupled to the output gear 14 acting as the output rotating element. The collinear diagram of Fig. 3 includes a white circle indicative of the rotation speed of the input shaft 12, i.e., input rotation speed N_{IN}, and a black circle indicative of a coupling portion to the transmission case 28 that is the non-rotating member, i.e., zero rotation speed, and the same applies to the description of the following collinear diagrams.

In the collinear diagram of Fig. 3, the nine rotating elements in the automatic transmission 10 are selectively coupled through engagement of the six clutches C1 to C6, and the rotating elements coupled to each other have the rotation speeds equal to each other. For example, when the first shift stage "1st" is established, the second clutch C2, the third clutch C3, the fourth clutch C4, and the fifth clutch C5 are engaged as depicted in the engagement table of Fig. 2. Therefore, the carrier CA1, the ring gear R2, and the carrier CA3 are integrally coupled through the engagement of the second clutch C2 and the fourth clutch C4 and, as indicated by a horizontal line (broken line) Xa of the collinear diagram of Fig. 3, the rotation speed of the carrier CA1 indicated by the vertical line Y2, the rotation speed of the ring gear R2 indicated by the vertical line Y4, and the rotation speed of the carrier CA3 indicated by the vertical line Y8 are equal to each other. The ring gear R1, the carrier CA2, and the sun gear S3 are integrally coupled through the engagement of the third clutch C3 and the fifth clutch C5 and, as indicated by a horizontal line (broken line) Xb of the collinear diagram of Fig. 3, the rotation speed of the ring gear R1 indicated by the vertical line Y1, the rotation speed of the carrier CA2 indicated by the vertical line Y5, and the rotation speed of the sun gear S3 indicated by the vertical line Y9 are equal to each other.

As described above, the relative relationships of the rotation speeds of the rotating elements are defined depending on a combination of engagement and release of the six clutches C1 to C6 at the time of establishment of each of the shift stages. In Fig. 3, the relationship corresponding to the first shift stage "1st" is indicated by a straight line L1; the relationship corresponding to the second shift stage "2nd" is indicated by a straight line L2; the relationship corresponding to the third shift stage "3rd" is indicated by a straight line L3; the relationship corresponding to the fourth shift stage "4th" is indicated by a straight line L4; the relationship corresponding to the fifth shift stage "5th" is indicated by a straight line L5; the relationship corresponding to the sixth shift stage "6th" is indicated by a straight line L6; the relationship corresponding to the seventh shift stage "7th" is indicated by a straight line L7; the relationship corresponding to the eighth shift stage "8th" is indicated by a straight line L8; and the relationship corresponding to the reverse shift stage "R" is indicated by a straight line LR. In the collinear diagram of Fig. 3, since one drawing is used for representing the relative relationships of the rotation speeds of the rotating elements related to all the shift stages achievable in the automatic transmission 10, the straight lines L1 to L8 and LR are not necessarily straight lines between the planetary gear devices 22, 24, and 26; however, the rotation speeds of the rotating elements in the planetary gear devices 22, 24, and 26 are equally represented depending on the engagement of the six clutches C1 to C6 so as to completely represent the relative rotation speeds of the nine rotating elements of the automatic transmission 10 at the shift stages. The same applies to the description of the following collinear diagrams.

As depicted in Fig. 3, in the automatic transmission 10, a rotation speed of the output gear 14 at the first shift stage "1st" is indicated by an intersection between the straight line L1 defined when the second clutch C2, the third clutch C3, the fourth clutch C4, and the fifth clutch C5 are engaged and the vertical line Y7 indicative of the rotation speed of the ring gear R3 coupled to the output gear 14 that is the output rotating element. The rotation speed of the output gear 14 at the second shift stage "2nd" is indicated by an intersection between the straight line L2 defined when the first clutch C1, the third clutch C3, the fourth clutch C4, and the fifth clutch C5 are engaged and the vertical line Y7. The rotation speed of the output gear 14 at the third shift stage "3rd" is indicated by an intersection between the straight line L3 defined when the first clutch C1, the third clutch C3, the fourth clutch C4, and the sixth clutch C6 are engaged and the vertical line Y7. The rotation speed of the output gear 14 at the fourth shift stage "4th" is indicated by an intersection between the straight line L4 defined when the first clutch C1, the fourth clutch C4, the fifth clutch C5, and the sixth clutch C6 are engaged and the vertical line Y7. The rotation speed of the output gear 14 at the fifth shift stage "5th" is indicated by an intersection between the straight line L5 defined when the first clutch C1, the third clutch C3, the fifth clutch C5, and the sixth clutch C6 are engaged and the vertical line Y7. The rotation speed of the output gear 14 at the sixth shift stage "6th" is indicated by an intersection between the straight line L6 defined when the second clutch C2, the third clutch C3, the fifth clutch C5, and the sixth clutch C6 are engaged and the vertical line Y7. The rotation speed of the output gear 14 at the seventh shift stage "7th" is indicated by an intersection between the straight line L7 defined when the first clutch C1, the second clutch C2, the fifth clutch C5, and the sixth clutch C6 are engaged and the vertical line Y7. The rotation speed of the output gear 14 at the eighth shift stage "8th" is indicated by an intersection between the straight line L8 defined when the first clutch C1, the second clutch C2, the third clutch C3, and the sixth clutch C6 are engaged and the vertical line Y7. The rotation speed of the output gear 14 at the reverse shift stage "R" is indicated by an intersection between the straight line LR defined when the first clutch C1, the second clutch C2, the fourth clutch C4, and the fifth clutch C5 are engaged and the vertical line Y7.

Other preferred embodiments of the present invention will then be described with reference to the drawings. In the following description, the portions mutually common to the embodiments are denoted by the same reference numerals and will not be described.

### Second Embodiment

Fig. 4 is a schematic for explaining a configuration of a vehicle automatic transmission 30 that is another embodiment of the present invention. As indicated in Fig. 4, as is the case with the automatic transmission 10 of the embodiment, the automatic transmission 30 of this embodiment is made up of the single pinion type first planetary gear device 22 having the predetermined gear ratio ρ1 of, for example, about "0.6", the single pinion type second planetary gear device 24 having the predetermined gear ratio p2 of, for example, about "0.6", and the single pinion type third planetary gear device 26 having the predetermined gear ratio p3 of, for example, about "0.6", disposed on a common center axis in the transmission case 28. Therefore, the three planetary gear devices 22, 24, and 26 included in the automatic transmission 30 have the gear ratios equal to each other. The sun gear S1 of the first planetary gear device 22 is coupled to the transmission case 28 that is the non-rotating member. The ring gear R2 of the second planetary gear device 24 is coupled to the output gear 14 that is the output rotating element.

In the automatic transmission 30, a plurality of rotating elements is configured to include the sun gears S, the carriers CA, and the ring gears R of the three respective planetary gear devices 22, 24, and 26. The sun gear S2 of the second planetary gear device 24 and the carrier CA3 of the third planetary gear device 26 are coupled to each other and configured as an integral rotating element. Therefore, the automatic transmission 30 of this embodiment has the sun gear S1, the carrier CA1, the ring gear R1 in the first planetary gear device 22, the sun gear S2 (the carrier CA3), the carrier CA2, the ring gear R2 in the second planetary gear device 24, the sun gear S3, and the ring gear R3 in the third planetary gear device 26 correspond to the plurality of the rotating elements disposed rotatably relative to the transmission case 28.

The automatic transmission 30 is disposed with the clutches C1 to C6 between the multiple rotating elements. In particular, the first clutch C1 selectively coupling the input shaft 12 and the carrier CA2 is disposed between the input shaft 12 that is the input rotating element and the carrier CA2 of the second planetary gear device 24. The second clutch C2 selectively coupling the ring gear R1 and the sun gear S2/the carrier CA3 coupled to each other is disposed between the ring gear R1 of the first planetary gear device 22 and the sun gear S2 of the second planetary gear device 24/the carrier CA3 of the third planetary gear device 26 coupled to each other. The third clutch C3 selectively coupling the carrier CA1 and the carrier CA2 is disposed between the carrier CA1 of the first planetary gear device 22 and the carrier CA2 of the second planetary gear device 24. The fourth clutch C4 selectively coupling the ring gear R1 and the ring gear R3 is disposed between the ring gear R1 of the first planetary gear device 22 and the ring gear R3 of the third planetary gear device 26. The fifth clutch C5 selectively coupling the carrier CA1 and the ring gear R3 is disposed between the carrier CA1 of the first planetary gear device 22 and the ring gear R3 of the third planetary gear device 26. The sixth clutch C6 selectively coupling the input shaft 12 and the sun gear S3 is disposed between the input shaft 12 and the sun gear S3 of the third planetary gear device 26.

Fig. 5 is an operation table for explaining an operation state of engagement elements when a plurality of shift stages is selectively established in the automatic transmission 30. As depicted in Fig. 5, in the automatic transmission 30, the first shift stage "1st" with a gear ratio "4.062" is established by engagement of the second clutch C2, the third clutch C3, the fifth clutch C5, and the sixth clutch C6. The second shift stage "2nd" with a gear ratio "2.500" is established by engagement of the second clutch C2, the third clutch C3, the fourth clutch C4, and the sixth clutch C6. The third shift stage "3rd" with a gear ratio "1.562" is established by engagement of the first clutch C1, the second clutch C2, the third clutch C3, and the fourth clutch C4. The fourth shift stage "4th" with a gear ratio "1.290" is established by engagement of the first clutch C1, the third clutch C3, the fourth clutch C4, and the sixth clutch C6. The fifth shift stage "5th" with a gear ratio "1.000" is established by engagement of the first clutch C1, the second clutch C2, the fourth clutch C4, and the sixth clutch C6. The sixth shift stage "6th" with a gear ratio "0.813" is established by engagement of the first clutch C1, the second clutch C2, the fifth clutch C5, and the sixth clutch C6. The seventh shift stage "7th" with a gear ratio "0.727" is established by engagement of the first clutch C1, the fourth clutch C4, the fifth clutch C5, and the sixth clutch C6. The eighth shift stage "8th" with a gear ratio "0.625" is established by engagement of the first clutch C1, the second clutch C2, the fourth clutch C4, and the fifth clutch C5. The reverse shift stage "R" with a gear ratio "4.444" is established by engagement of the third clutch C3, the fourth clutch C4, the fifth clutch C5, and the sixth clutch C6. A neutral state is established by releasing all the clutches C.

In other words, in the automatic transmission 30, the first shift stage "1st" is established by release of the first clutch C1 and the fourth clutch C4. The second shift stage "2nd" is established by release of the first clutch C1 and the fifth clutch C5. The third shift stage "3rd" is established by release of the fifth clutch C5 and the sixth clutch C6. The fourth shift stage "4th" is established by release of the second clutch C2 and the fifth clutch C5. The fifth shift stage "5th" is established by release of the third clutch C3 and the fifth clutch C5. The sixth shift stage "6th" is established by release of the third clutch C3 and the fourth clutch C4. The seventh shift stage "7th" is established by release of the second clutch C2 and the third clutch C3. The eighth shift stage "8th" is established by release of the third clutch C3 and the sixth clutch C6. The reverse shift stage "R" is established by release of the first clutch C1 and the second clutch C2.

Therefore, in the automatic transmission 30, four clutches of the six clutches C1 to C6 are engaged and the remaining two clutches are released to selectively establish any of the eight forward shift stages from the first shift stage "1st" to the eighth shift stage "8th" and the reverse shift stage "R". In other words, the engagement elements involved with a shift of the automatic transmission 30 are all devices (clutches) engaged to inhibit relative rotation between the rotating elements and released to allow relative rotation between the rotating elements, do not include a device (brake) engaged to directly couple the rotating elements to the transmission case 28, and selectively establish all the multiple shift stages achievable in the automatic transmission 30, i.e., the eight forward shift stages from the first shift stage "1st" to the eighth shift stage "8th" and the reverse shift stage "R", depending on a combination of engagement and release of the six clutches C1 to C6.

As apparent from the engagement table of Fig. 5, a switchover of shift stages (single shift) in the automatic transmission 30 is performed by releasing one clutch of the four clutches engaged before the shift and engaging one clutch of the two clutches released before the shift. For example, the shift from the first shift stage to the second shift stage is performed by releasing the fifth clutch C5 and engaging the fourth clutch C4. Therefore, the automatic transmission 30 performs a so-called clutch-to-clutch shift by switching a pair of clutches to be gripped, for a switchover of all the shift stages except a skip shift at least in the forward shift stages.

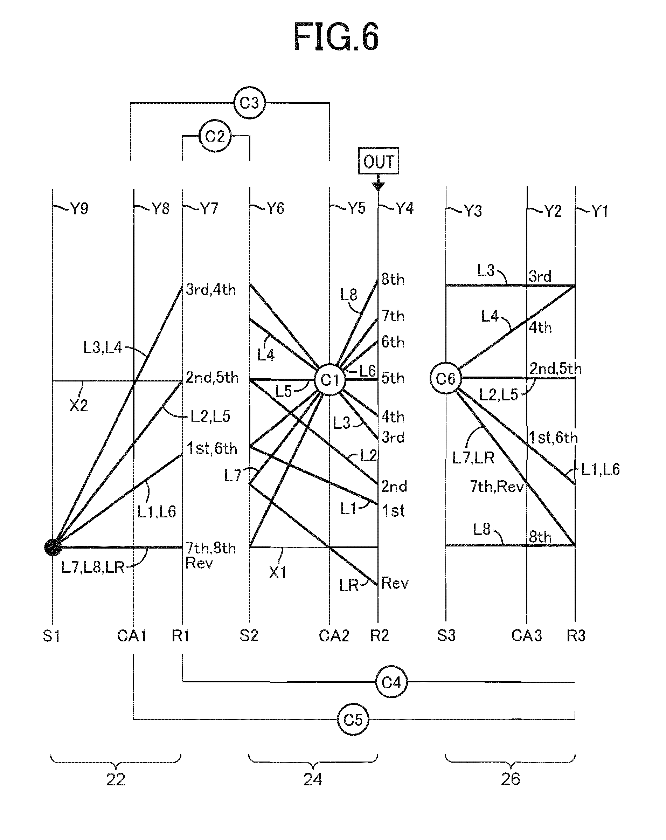

Fig. 6 is a collinear diagram capable of representing on straight lines relative relationships of rotation speeds of the rotating elements having a different coupling state for each shift stage in the automatic transmission 30. With regard to the nine vertical lines Y1 to Y9 in the collinear diagram of Fig. 6, from right to left, Y1, Y2, Y3, Y4, Y5, Y6, Y7, Y8, and Y9 indicate relative rotation speeds of the ring gear R3, the carrier CA3, the sun gear S3 of the third planetary gear device 26, the ring gear R2, the carrier CA2, the sun gear S2 of the second planetary gear device 24, the ring gear R1, the carrier CA1, and the sun gear S1 of the first planetary gear device 22. Since the ring gear R2 and the carrier CA3 are coupled to each other, the rotation speed corresponding to the vertical line Y6 is equal to the rotation speed corresponding to the vertical line Y2. The intervals between the vertical lines Y1 to Y9 are determined depending on the gear ratios ρ1, p2, and p3 of the planetary gear devices 22, 24, and 26. In particular, for respective sets of the vertical lines Y1 to Y3 corresponding to the three rotation elements in the third planetary gear device 26, the vertical lines Y4 to Y6 corresponding to the three rotation elements in the second planetary gear device 24, and the vertical lines Y7 to Y9 corresponding to the three rotation elements in the first planetary gear device 22, the interval corresponding to one is set between the sun gear S and the carrier CA, and the interval corresponding to p is set between the carrier CA and the ring gear R.

When the automatic transmission 30 is represented by using the collinear diagram of Fig. 6, the sun gear S2 and the carrier CA3 are coupled to each other. The input shaft 12 is selectively coupled via the first clutch C1 to the carrier CA2 and is selectively coupled via the sixth clutch C6 to the sun gear S3. The sun gear S1 is coupled to the transmission case 28 that is the non-rotating member. The carrier CA1 is selectively coupled via the third clutch C3 to the carrier CA2 and is selectively coupled via the fifth clutch C5 to the ring gear R3. The ring gear R1 is selectively coupled via the second clutch C2 to the sun gear S2 and is selectively coupled via the fourth clutch C4 to the ring gear R3. The ring gear R2 is coupled to the output gear 14 acting as the output rotating element.

As depicted in Fig. 6, in the automatic transmission 30, the rotation speed of the output gear 14 at the first shift stage "1st" is indicated by an intersection between the straight line L1 defined when the second clutch C2, the third clutch C3, the fifth clutch C5, and the sixth clutch C6 are engaged and the vertical line Y4 indicative of the rotation speed of the ring gear R2 coupled to the output gear 14 that is the output rotating element. The rotation speed of the output gear 14 at the second shift stage "2nd" is indicated by an intersection between the straight line L2 defined when the second clutch C2, the third clutch C3, the fourth clutch C4, and the sixth clutch C6 are engaged and the vertical line Y4. The rotation speed of the output gear 14 at the third shift stage "3rd" is indicated by an intersection between the straight line L3 defined when the first clutch C1, the second clutch C2, the third clutch C3, and the fourth clutch C4 are engaged and the vertical line Y4. The rotation speed of the output gear 14 at the fourth shift stage "4th" is indicated by an intersection between the straight line L4 defined when the first clutch C1, the third clutch C3, the fourth clutch C4, and the sixth clutch C6 are engaged and the vertical line Y4. The rotation speed of the output gear 14 at the fifth shift stage "5th" is indicated by an intersection between the straight line L5 defined when the first clutch C1, the second clutch C2, the fourth clutch C4, and the sixth clutch C6 are engaged and the vertical line Y4. The rotation speed of the output gear 14 at the sixth shift stage "6th" is indicated by an intersection between the straight line L6 defined when the first clutch C1, the second clutch C2, the fifth clutch C5, and the sixth clutch C6 are engaged and the vertical line Y4. The rotation speed of the output gear 14 at the seventh shift stage "7th" is indicated by an intersection between the straight line L7 defined when the first clutch C1, the fourth clutch C4, the fifth clutch C5, and the sixth clutch C6 are engaged and the vertical line Y4. The rotation speed of the output gear 14 at the eighth shift stage "8th" is indicated by an intersection between the straight line L8 defined when the first clutch C1, the second clutch C2, the fourth clutch C4, and the fifth clutch C5 are engaged and the vertical line Y4. The rotation speed of the output gear 14 at the reverse shift stage "R" is indicated by an intersection between the straight line LR defined when the third clutch C3, the fourth clutch C4, the fifth clutch C5, and the sixth clutch C6 are engaged and the vertical line Y4.

### Third Embodiment

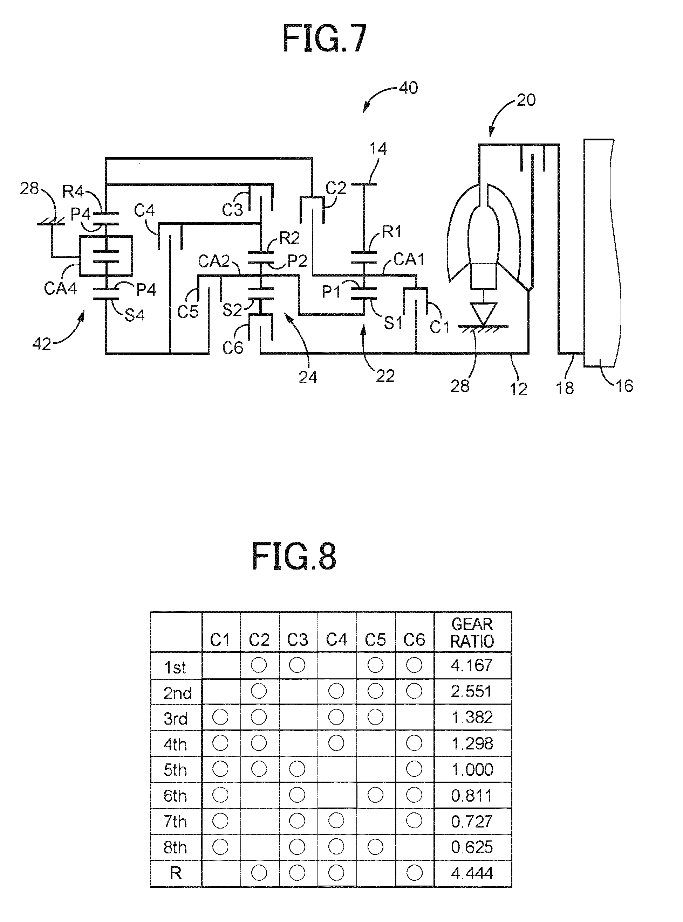

Fig. 7 is a schematic for explaining a configuration of a vehicle automatic transmission 40 that is further another embodiment of the present invention. As indicated in Fig. 7, the automatic transmission 40 of this embodiment is made up of the single pinion type first planetary gear device 22 having the predetermined gear ratio ρ1 of, for example, about "0.62", the single pinion type second planetary gear device 24 having the predetermined gear ratio p2 of, for example, about "0.6", and a double pinion type third planetary gear device 42 having the predetermined gear ratio p3 of, for example, about "0.6", disposed on a common center axis in the transmission case 28. The third planetary gear device 42 includes a sun gear S4, a plurality of pairs of pinion gears P4 meshed with each other, a carrier CA4 supporting the pinion gears P4 in a rotatable and revolvable manner, and a ring gear R4 meshed with the sun gear S4 via the pinion gears P4 as rotating elements (rotating members). The carrier CA4 of the third planetary gear device 42 is coupled to the transmission case 28 that is the non-rotating member. The ring gear R1 of the first planetary gear device 22 is coupled to the output gear 14 that is the output rotating element.

In the automatic transmission 40, a plurality of rotating elements is configured to include the sun gears S, the carriers CA, and the ring gears R of the three respective planetary gear devices 22, 24, and 42. The sun gear S1 of the first planetary gear device 22 and the carrier CA2 of the second planetary gear device 24 are coupled to each other and configured as an integral rotating element. Therefore, the automatic transmission 40 of this embodiment has the sun gear S1 (the carrier CA2), the carrier CA1, the ring gear R1 in the first planetary gear device 22, the sun gear S2, the ring gear R2 in the second planetary gear device 24, the sun gear S4, the carrier CA4, and the ring gear R4 in the third planetary gear device 42 correspond to the plurality of the rotating elements disposed rotatably relative to the transmission case 28.

The automatic transmission 40 is disposed with the clutches C1 to C6 between the multiple rotating elements. In particular, the first clutch C1 selectively coupling the input shaft 12 and the carrier CA1 is disposed between the input shaft 12 that is the input rotating element and the carrier CA1 of the first planetary gear device 22. The second clutch C2 selectively coupling the carrier CA1 and the ring gear R4 is disposed between the carrier CA1 of the first planetary gear device 22 and the ring gear R4 of the third planetary gear device 42. The third clutch C3 selectively coupling the ring gear R2 and the ring gear R4 is disposed between the ring gear R2 of the second planetary gear device 24 and the ring gear R4 of the third planetary gear device 42. The fourth clutch C4 selectively coupling the ring gear R2 and the sun gear S4 is disposed between the ring gear R2 of the second planetary gear device 24 and the sun gear S4 of the third planetary gear device 42. The fifth clutch C5 selectively coupling the sun gear S4 and the sun gear S1/the carrier CA2 coupled to each other is disposed between the sun gear S1 of the first planetary gear device 22/the carrier CA2 of the second planetary gear device 24 coupled to each other and the sun gear S4 of the third planetary gear device 42. The sixth clutch C6 selectively coupling the input shaft 12 and the sun gear S2 is disposed between the input shaft 12 and the sun gear S2 of the second planetary gear device 24.

Fig. 8 is an operation table for explaining an operation state of engagement elements when a plurality of shift stages is selectively established in the automatic transmission 40. As depicted in Fig. 8, in the automatic transmission 40, the first shift stage " 1 st" with a gear ratio "4.167" is established by engagement of the second clutch C2, the third clutch C3, the fifth clutch C5, and the sixth clutch C6. The second shift stage "2nd" with a gear ratio "2.551" is established by engagement of the second clutch C2, the fourth clutch C4, the fifth clutch C5, and the sixth clutch C6. The third shift stage "3rd" with a gear ratio "1.382" is established by engagement of the first clutch C1, the second clutch C2, the fourth clutch C4, and the fifth clutch C5. The fourth shift stage "4th" with a gear ratio "1.298" is established by engagement of the first clutch C1, the second clutch C2, the fourth clutch C4, and the sixth clutch C6. The fifth shift stage "5th" with a gear ratio "1.000" is established by engagement of the first clutch C1, the second clutch C2, the third clutch C3, and the sixth clutch C6. The sixth shift stage "6th" with a gear ratio "0.811" is established by engagement of the first clutch C1, the third clutch C3, the fifth clutch C5, and the sixth clutch C6. The seventh shift stage "7th" with a gear ratio "0.727" is established by engagement of the first clutch C1, the third clutch C3, the fourth clutch C4, and the sixth clutch C6. The eighth shift stage "8th" with a gear ratio "0.625" is established by engagement of the first clutch C1, the third clutch C3, the fourth clutch C4, and the fifth clutch C5. The reverse shift stage "R" with a gear ratio "4.444" is established by engagement of the second clutch C2, the third clutch C3, the fourth clutch C4, and the sixth clutch C6. A neutral state is established by releasing all the clutches C.

In other words, in the automatic transmission 40, the first shift stage "1st" is established by release of the first clutch C1 and the fourth clutch C4. The second shift stage "2nd" is established by release of the first clutch C1 and the third clutch C3. The third shift stage "3rd" is established by release of the third clutch C3 and the sixth clutch C6. The fourth shift stage "4th" is established by release of the third clutch C3 and the fifth clutch C5. The fifth shift stage "5th" is established by release of the fourth clutch C4 and the fifth clutch C5. The sixth shift stage "6th" is established by release of the second clutch C2 and the fourth clutch C4. The seventh shift stage "7th" is established by release of the second clutch C2 and the fifth clutch C5. The eighth shift stage "8th" is established by release of the second clutch C2 and the sixth clutch C6. The reverse shift stage "R" is established by release of the first clutch C1 and the fifth clutch C5.

Therefore, in the automatic transmission 40, four clutches of the six clutches C1 to C6 are engaged and the remaining two clutches are released to selectively establish any of the eight forward shift stages from the first shift stage "1st" to the eighth shift stage "8th" and the reverse shift stage "R". In other words, the engagement elements involved with a shift of the automatic transmission 40 are all devices (clutches) engaged to inhibit relative rotation between the rotating elements and released to allow relative rotation between the rotating elements, do not include a device (brake) engaged to directly couple the rotating elements to the transmission case 28, and selectively establish all the multiple shift stages achievable in the automatic transmission 40, i.e., the eight forward shift stages from the first shift stage "1st" to the eighth shift stage "8th" and the reverse shift stage "R", depending on a combination of engagement and release of the six clutches C1 to C6.

As apparent from the engagement table of Fig. 8, a switchover of shift stages (single shift) in the automatic transmission 40 is performed by releasing one clutch of the four clutches engaged before the shift and engaging one clutch of the two clutches released before the shift. For example, the shift from the first shift stage to the second shift stage is performed by releasing the third clutch C3 and engaging the fourth clutch C4. Therefore, the automatic transmission 40 performs a so-called clutch-to-clutch shift by switching a pair of clutches to be gripped, for a switchover of all the shift stages except a skip shift at least in the forward shift stages.

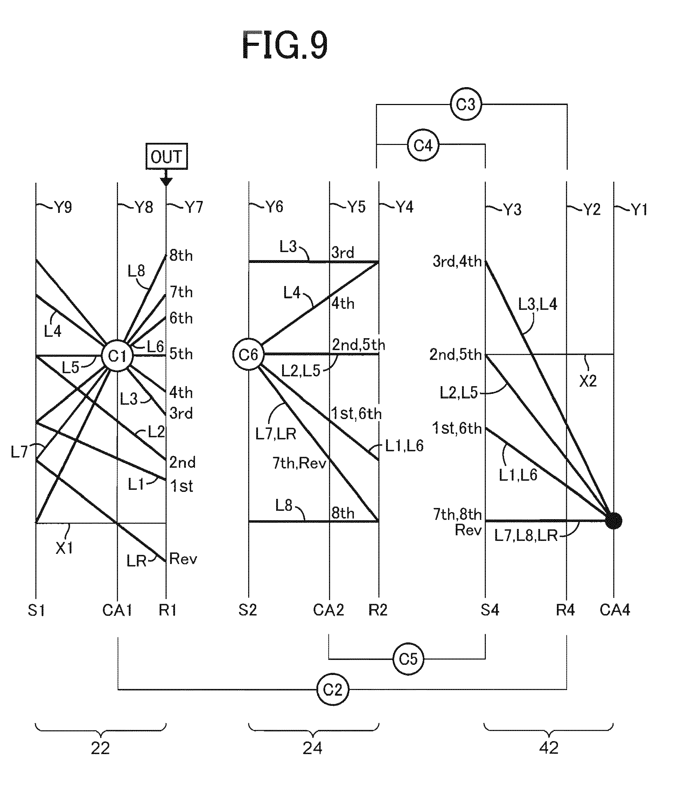

Fig. 9 is a collinear diagram capable of representing on straight lines relative relationships of rotation speeds of the rotating elements having a different coupling state for each shift stage in the automatic transmission 40. With regard to the nine vertical lines Y1 to Y9 in the collinear diagram of Fig. 9, from right to left, Y1, Y2, Y3, Y4, Y5, Y6, Y7, Y8, and Y9 indicate relative rotation speeds of the carrier CA4, the ring gear R4, the sun gear S4 of the third planetary gear device 42, the ring gear R2, the carrier CA2, the sun gear S2 of the second planetary gear device 24, the ring gear R1, the carrier CA1, and the sun gear S1 of the first planetary gear device 22. Since the sun gear S1 and the carrier CA2 are coupled to each other, the rotation speed corresponding to the vertical line Y5 is equal to the rotation speed corresponding to the vertical line Y9. The intervals between the vertical lines Y1 to Y9 are determined depending on the gear ratios ρ1, p2, and p3 of the planetary gear devices 22, 24, and 42. In particular, for respective sets of the vertical lines Y1 to Y3 corresponding to the three rotation elements in the third planetary gear device 42, the vertical lines Y4 to Y6 corresponding to the three rotation elements in the second planetary gear device 24, and the vertical lines Y7 to Y9 corresponding to the three rotation elements in the first planetary gear device 22, the interval corresponding to one is set between the sun gear S and the carrier CA, and the interval corresponding to p is set between the carrier CA and the ring gear R.

When the automatic transmission 40 is represented by using the collinear diagram of Fig. 9, the sun gear S1 and the carrier CA2 are coupled to each other. The input shaft 12 is selectively coupled via the first clutch C1 to the carrier CA1 and is selectively coupled via the sixth clutch C6 to the sun gear S2. The carrier CA4 is coupled to the transmission case 28 that is the non-rotating member. The carrier CA1 is selectively coupled via the second clutch C2 to the ring gear R4. The sun gear S1 and the carrier CA2 coupled to each other are selectively coupled via the fifth clutch C5 to the sun gear S4. The ring gear R2 is selectively coupled via the third clutch C3 to the ring gear R4 and is selectively coupled via the fourth clutch C4 to the sun gear S4. The ring gear R1 is coupled to the output gear 14 acting as the output rotating element.

As depicted in Fig. 9, in the automatic transmission 40, the rotation speed of the output gear 14 at the first shift stage "1st" is indicated by an intersection between the straight line L1 defined when the second clutch C2, the third clutch C3, the fifth clutch C5, and the sixth clutch C6 are engaged and the vertical line Y7 indicative of the rotation speed of the ring gear R1 coupled to the output gear 14 that is the output rotating element. The rotation speed of the output gear 14 at the second shift stage "2nd" is indicated by an intersection between the straight line L2 defined when the second clutch C2, the fourth clutch C4, the fifth clutch C5, and the sixth clutch C6 are engaged and the vertical line Y7. The rotation speed of the output gear 14 at the third shift stage "3rd" is indicated by an intersection between the straight line L3 defined when the first clutch C1, the second clutch C2, the fourth clutch C4, and the fifth clutch C5 are engaged and the vertical line Y7. The rotation speed of the output gear 14 at the fourth shift stage "4th" is indicated by an intersection between the straight line L4 defined when the first clutch C1, the second clutch C2, the fourth clutch C4, and the sixth clutch C6 are engaged and the vertical line Y7. The rotation speed of the output gear 14 at the fifth shift stage "5th" is indicated by an intersection between the straight line L5 defined when the first clutch C1, the second clutch C2, the third clutch C3, and the sixth clutch C6 are engaged and the vertical line Y7. The rotation speed of the output gear 14 at the sixth shift stage "6th" is indicated by an intersection between the straight line L6 defined when the first clutch C1, the third clutch C3, the fifth clutch C5, and the sixth clutch C6 are engaged and the vertical line Y7. The rotation speed of the output gear 14 at the seventh shift stage "7th" is indicated by an intersection between the straight line L7 defined when the first clutch C1, the third clutch C3, the fourth clutch C4, and the sixth clutch C6 are engaged and the vertical line Y7. The rotation speed of the output gear 14 at the eighth shift stage "8th" is indicated by an intersection between the straight line L8 defined when the first clutch C1, the third clutch C3, the fourth clutch C4, and the fifth clutch C5 are engaged and the vertical line Y7. The rotation speed of the output gear 14 at the reverse shift stage "R" is indicated by an intersection between the straight line LR defined when the second clutch C2, the third clutch C3, the fourth clutch C4, and the sixth clutch C6 are engaged and the vertical line Y7.

### Fourth Embodiment

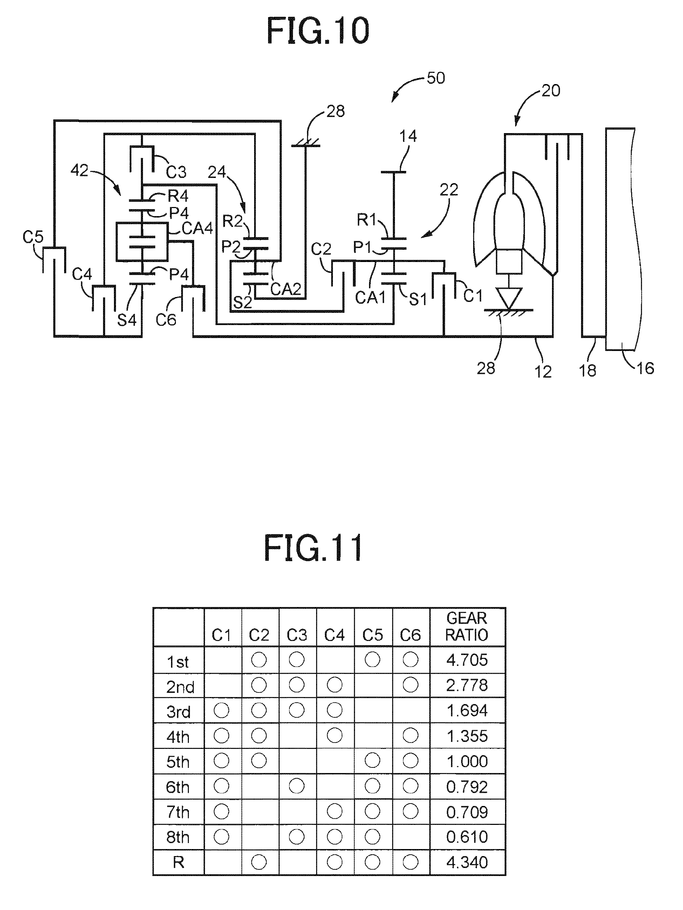

Fig. 10 is a schematic for explaining a configuration of a vehicle automatic transmission 50 that is yet another embodiment of the present invention. As indicated in Fig. 10, the automatic transmission 50 of this embodiment is made up of the single pinion type first planetary gear device 22 having the predetermined gear ratio ρ1 of, for example, about "0.64", the single pinion type second planetary gear device 24 having the predetermined gear ratio p2 of, for example, about "0.64", and the double pinion type third planetary gear device 42 having the predetermined gear ratio p3 of, for example, about "0.64", disposed on a common center axis in the transmission case 28. Therefore, the three planetary gear devices 22, 24, and 42 included in the automatic transmission 50 have the gear ratios equal to each other. The sun gear S2 of the second planetary gear device 24 is coupled to the transmission case 28 that is the non-rotating member. The ring gear R1 of the first planetary gear device 22 is coupled to the output gear 14 that is the output rotating element.

In the automatic transmission 50, a plurality of rotating elements is configured to include the sun gears S, the carriers CA, and the ring gears R of the three respective planetary gear devices 22, 24, and 42. The sun gear S1 of the first planetary gear device 22 and the ring gear R4 of the third planetary gear device 42 are coupled to each other and configured as an integral rotating element. Therefore, the automatic transmission 50 of this embodiment has the sun gear S1 (the ring gear R4), the carrier CA1, the ring gear R1 in the first planetary gear device 22, the sun gear S2, the carrier CA2, the ring gear R2 in the second planetary gear device 24, the sun gear S4, and the carrier CA4 in the third planetary gear device 42 correspond to the plurality of the rotating elements disposed rotatably relative to the transmission case 28.

The automatic transmission 50 is disposed with the clutches C1 to C6 between the multiple rotating elements. In particular, the first clutch C1 selectively coupling the input shaft 12 and the carrier CA1 is disposed between the input shaft 12 that is the input rotating element and the carrier CA1 of the first planetary gear device 22. The second clutch C2 selectively coupling the carrier CA1 and the carrier CA2 is disposed between the carrier CA1 of the first planetary gear device 22 and the carrier CA2 of the second planetary gear device 24. The third clutch C3 selectively coupling the ring gear R2 and the sun gear S1/the ring gear R4 coupled to each other is disposed between the ring gear R2 of the second planetary gear device 24 and the sun gear S1 of the first planetary gear device 22/the ring gear R4 of the third planetary gear device 42 coupled to each other. The fourth clutch C4 selectively coupling the ring gear R2 and the sun gear S4 is disposed between the ring gear R2 of the second planetary gear device 24 and the sun gear S4 of the third planetary gear device 42. The fifth clutch C5 selectively coupling the carrier CA2 and the sun gear S4 is disposed between the carrier CA2 of the second planetary gear device 24 and the sun gear S4 of the third planetary gear device 42. The sixth clutch C6 selectively coupling the input shaft 12 and the carrier CA4 is disposed between the input shaft 12 and the carrier CA4 of the third planetary gear device 42.

Fig. 11 is an operation table for explaining an operation state of engagement elements when a plurality of shift stages is selectively established in the automatic transmission 50. As depicted in Fig. 11, in the automatic transmission 50, the first shift stage "1st" with a gear ratio "4.705" is established by engagement of the second clutch C2, the third clutch C3, the fifth clutch C5, and the sixth clutch C6. The second shift stage "2nd" with a gear ratio "2.778" is established by engagement of the second clutch C2, the third clutch C3, the fourth clutch C4, and the sixth clutch C6. The third shift stage "3rd" with a gear ratio "1.694" is established by engagement of the first clutch C1, the second clutch C2, the third clutch C3, and the fourth clutch C4. The fourth shift stage "4th" with a gear ratio "1.355" is established by engagement of the first clutch C1, the second clutch C2, the fourth clutch C4, and the sixth clutch C6. The fifth shift stage "5th" with a gear ratio "1.000" is established by engagement of the first clutch C1, the second clutch C2, the fifth clutch C5, and the sixth clutch C6. The sixth shift stage "6th" with a gear ratio "0.792" is established by engagement of the first clutch C1, the third clutch C3, the fifth clutch C5, and the sixth clutch C6. The seventh shift stage "7th" with a gear ratio "0.709" is established by engagement of the first clutch C1, the fourth clutch C4, the fifth clutch C5, and the sixth clutch C6. The eighth shift stage "8th" with a gear ratio "0.610" is established by engagement of the first clutch C1, the third clutch C3, the fourth clutch C4, and the fifth clutch C5. The reverse shift stage "R" with a gear ratio "4.340" is established by engagement of the second clutch C2, the fourth clutch C4, the fifth clutch C5, and the sixth clutch C6. A neutral state is established by releasing all the clutches C.

In other words, in the automatic transmission 50, the first shift stage "1st" is established by release of the first clutch C1 and the fourth clutch C4. The second shift stage "2nd" is established by release of the first clutch C1 and the fifth clutch C5. The third shift stage "3rd" is established by release of the fifth clutch C5 and the sixth clutch C6. The fourth shift stage "4th" is established by release of the third clutch C3 and the fifth clutch C5. The fifth shift stage "5th" is established by release of the third clutch C3 and the fourth clutch C4. The sixth shift stage "6th" is established by release of the second clutch C2 and the fourth clutch C4. The seventh shift stage "7th" is established by release of the second clutch C2 and the third clutch C3. The eighth shift stage "8th" is established by release of the second clutch C2 and the sixth clutch C6. The reverse shift stage "R" is established by release of the first clutch C1 and the third clutch C3.

Therefore, in the automatic transmission 50, four clutches of the six clutches C1 to C6 are engaged and the remaining two clutches are released to selectively establish any of the eight forward shift stages from the first shift stage "1st" to the eighth shift stage "8th" and the reverse shift stage "R". In other words, the engagement elements involved with a shift of the automatic transmission 50 are all devices (clutches) engaged to inhibit relative rotation between the rotating elements and released to allow relative rotation between the rotating elements, do not include a device (brake) engaged to directly couple the rotating elements to the transmission case 28, and selectively establish all the multiple shift stages achievable in the automatic transmission 50, i.e., the eight forward shift stages from the first shift stage "1st" to the eighth shift stage "8th" and the reverse shift stage "R", depending on a combination of engagement and release of the six clutches C1 to C6.

As apparent from the engagement table of Fig. 11, a switchover of shift stages (single shift) in the automatic transmission 50 is performed by releasing one clutch of the four clutches engaged before the shift and engaging one clutch of the two clutches released before the shift. For example, the shift from the first shift stage to the second shift stage is performed by releasing the fifth clutch C5 and engaging the fourth clutch C4. Therefore, the automatic transmission 50 performs a so-called clutch-to-clutch shift by switching a pair of clutches to be gripped, for a switchover of all the shift stages except a skip shift at least in the forward shift stages.

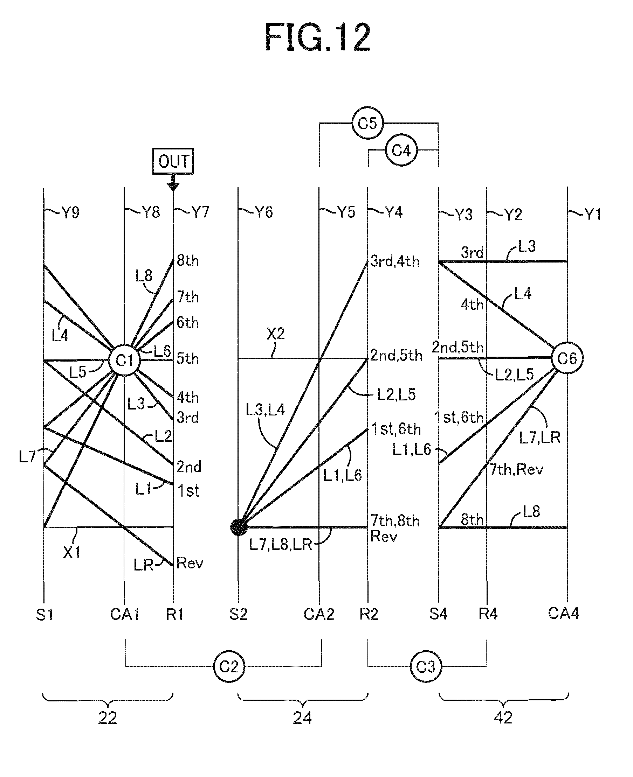

Fig. 12 is a collinear diagram capable of representing on straight lines relative relationships of rotation speeds of the rotating elements having a different coupling state for each shift stage in the automatic transmission 50. With regard to the nine vertical lines Y1 to Y9 in the collinear diagram of Fig. 12, from right to left, Y1, Y2, Y3, Y4, Y5, Y6, Y7, Y8, and Y9 indicate relative rotation speeds of the carrier CA4, the ring gear R4, the sun gear S4 of the third planetary gear device 42, the ring gear R2, the carrier CA2, the sun gear S2 of the second planetary gear device 24, the ring gear R1, the carrier CA1, and the sun gear S1 of the first planetary gear device 22. Since the sun gear S1 and the ring gear R4 are coupled to each other, the rotation speed corresponding to the vertical line Y2 is equal to the rotation speed corresponding to the vertical line Y9. The intervals between the vertical lines Y1 to Y9 are determined depending on the gear ratios ρ1, p2, and p3 of the planetary gear devices 22, 24, and 42. In particular, for respective sets of the vertical lines Y1 to Y3 corresponding to the three rotation elements in the third planetary gear device 42, the vertical lines Y4 to Y6 corresponding to the three rotation elements in the second planetary gear device 24, and the vertical lines Y7 to Y9 corresponding to the three rotation elements in the first planetary gear device 22, the interval corresponding to one is set between the sun gear S and the carrier CA, and the interval corresponding to p is set between the carrier CA and the ring gear R.

When the automatic transmission 50 is represented by using the collinear diagram of Fig. 12, the sun gear S1 and the ring gear R4 are coupled to each other. The input shaft 12 is selectively coupled via the first clutch C1 to the carrier CA1 and is selectively coupled via the sixth clutch C6 to the carrier CA4. The carrier CA1 is selectively coupled via the second clutch C2 to the carrier CA2. The sun gear S2 is coupled to the transmission case 28 that is the non-rotating member. The carrier CA2 is selectively coupled via the fifth clutch C5 to the sun gear S4. The ring gear R2 is selectively coupled via the third clutch C3 to the sun gear S1 and the ring gear R4 coupled to each other, and is selectively coupled via the fourth clutch C4 to the sun gear S4. The ring gear R1 is coupled to the output gear 14 acting as the output rotating element.

As depicted in Fig. 12, in the automatic transmission 50, the rotation speed of the output gear 14 at the first shift stage "1st" is indicated by an intersection between the straight line L1 defined when the second clutch C2, the third clutch C3, the fifth clutch C5, and the sixth clutch C6 are engaged and the vertical line Y7 indicative of the rotation speed of the ring gear R1 coupled to the output gear 14 that is the output rotating element. The rotation speed of the output gear 14 at the second shift stage "2nd" is indicated by an intersection between the straight line L2 defined when the second clutch C2, the third clutch C3, the fourth clutch C4, and the sixth clutch C6 are engaged and the vertical line Y7. The rotation speed of the output gear 14 at the third shift stage "3rd" is indicated by an intersection between the straight line L3 defined when the first clutch C1, the second clutch C2, the third clutch C3, and the fourth clutch C4 are engaged and the vertical line Y7. The rotation speed of the output gear 14 at the fourth shift stage "4th" is indicated by an intersection between the straight line L4 defined when the first clutch C1, the second clutch C2, the fourth clutch C4, and the sixth clutch C6 are engaged and the vertical line Y7. The rotation speed of the output gear 14 at the fifth shift stage "5th" is indicated by an intersection between the straight line L5 defined when the first clutch C1, the second clutch C2, the fifth clutch C5, and the sixth clutch C6 are engaged and the vertical line Y7. The rotation speed of the output gear 14 at the sixth shift stage "6th" is indicated by an intersection between the straight line L6 defined when the first clutch C1, the third clutch C3, the fifth clutch C5, and the sixth clutch C6 are engaged and the vertical line Y7. The rotation speed of the output gear 14 at the seventh shift stage "7th" is indicated by an intersection between the straight line L7 defined when the first clutch C1, the fourth clutch C4, the fifth clutch C5, and the sixth clutch C6 are engaged and the vertical line Y7. The rotation speed of the output gear 14 at the eighth shift stage "8th" is indicated by an intersection between the straight line L8 defined when the first clutch C1, the third clutch C3, the fourth clutch C4, and the fifth clutch C5 are engaged and the vertical line Y7. The rotation speed of the output gear 14 at the reverse shift stage "R" is indicated by an intersection between the straight line LR defined when the second clutch C2, the fourth clutch C4, the fifth clutch C5, and the sixth clutch C6 are engaged and the vertical line Y7.

### Fifth Embodiment

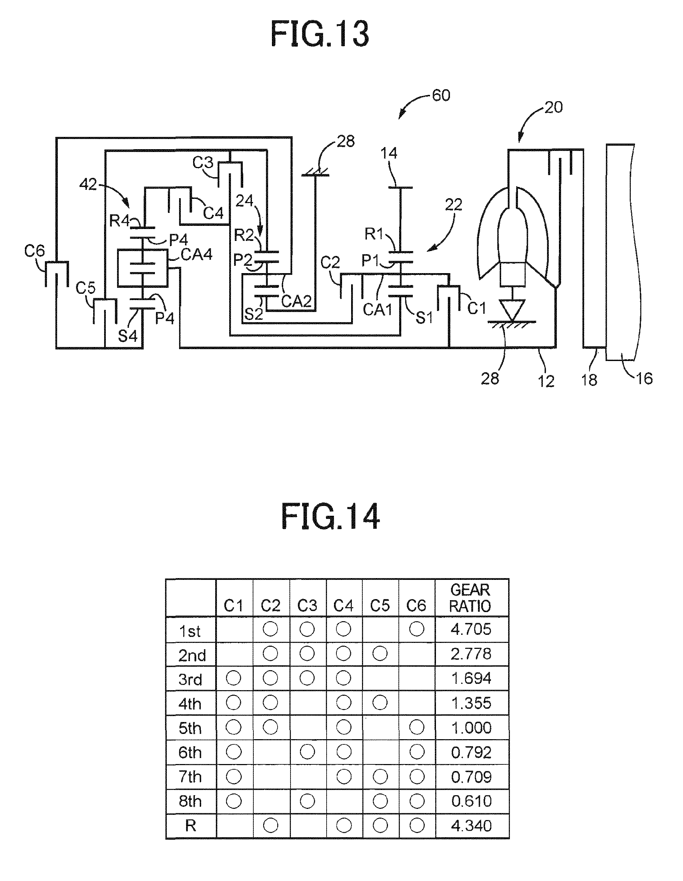

Fig. 13 is a schematic for explaining a configuration of a vehicle automatic transmission 60 that is further another embodiment of the present invention. As indicated in Fig. 13, the automatic transmission 60 of this embodiment is made up of the single pinion type first planetary gear device 22 having the predetermined gear ratio ρ1 of, for example, about "0.64", the single pinion type second planetary gear device 24 having the predetermined gear ratio p2 of, for example, about "0.64", and the double pinion type third planetary gear device 42 having the predetermined gear ratio p3 of, for example, about "0.64", disposed on a common center axis in the transmission case 28. Therefore, the three planetary gear devices 22, 24, and 42 included in the automatic transmission 50 have the gear ratios equal to each other. The sun gear S2 of the second planetary gear device 24 is coupled to the transmission case 28 that is the non-rotating member. The ring gear R1 of the first planetary gear device 22 is coupled to the output gear 14 that is the output rotating element.

In the automatic transmission 60, the sun gears S1, S2, S4, the carriers CA1, CA2, CA4, and the ring gears R1, R2, R4 in the three respective planetary gear devices 22, 24, and 42 are disposed rotatably relative to each other while the clutches C1 to C6 are released. In other words, the sun gears S, the carriers CA, and the ring gears R are disposed as respective individual members not coupled to each other. Therefore, the automatic transmission 60 of this embodiment has the sun gears S, the carriers CA, and the ring gears R1 of the planetary gear devices 22, 24, and 42 correspond to the plurality of the rotating elements disposed rotatably relative to the transmission case 28.

The automatic transmission 60 is disposed with the clutches C1 to C6 between the multiple rotating elements. In particular, the first clutch C1 selectively coupling the input shaft 12 and the carrier CA1 is disposed between the input shaft 12 that is the input rotating element and the carrier CA1 of the first planetary gear device 22. The second clutch C2 selectively coupling the carrier CA1 and the carrier CA2 is disposed between the carrier CA1 of the first planetary gear device 22 and carrier CA2 of the second planetary gear device 24. The third clutch C3 selectively coupling the sun gear S1 and the ring gear R2 is disposed between the sun gear S1 of the first planetary gear device 22 and the ring gear R2 of the second planetary gear device 24. The fourth clutch C4 selectively coupling the sun gear S1 and the ring gear R4 is disposed between the sun gear S1 of the first planetary gear device 22 and the ring gear R4 of the third planetary gear device 42. The fifth clutch C5 selectively coupling the ring gear R2 and the sun gear S4 is disposed between the ring gear R2 of the second planetary gear device 24 and the sun gear S4 of the third planetary gear device 42. The sixth clutch C6 selectively coupling the carrier CA2 and the sun gear S4 is disposed between the carrier CA2 of the second planetary gear device 24 and the sun gear S4 of the third planetary gear device 42.

Fig. 14 is an operation table for explaining an operation state of engagement elements when a plurality of shift stages is selectively established in the automatic transmission 60. As depicted in Fig. 14, in the automatic transmission 60, the first shift stage "1st" with a gear ratio "4.705" is established by engagement of the second clutch C2, the third clutch C3, the fourth clutch C4, and the sixth clutch C6. The second shift stage "2nd" with a gear ratio "2.778" is established by engagement of the second clutch C2, the third clutch C3, the fourth clutch C4, and the fifth clutch C5. The third shift stage "3rd" with a gear ratio "1.694" is established by engagement of the first clutch C1, the second clutch C2, the third clutch C3, and the fourth clutch C4. The fourth shift stage "4th" with a gear ratio "1.355" is established by engagement of the first clutch C1, the second clutch C2, the fourth clutch C4, and the fifth clutch C5. The fifth shift stage "5th" with a gear ratio "1.000" is established by engagement of the first clutch C1, the second clutch C2, the fourth clutch C4, and the sixth clutch C6. The sixth shift stage "6th" with a gear ratio "0.792" is established by engagement of the first clutch C1, the third clutch C3, the fourth clutch C4, and the sixth clutch C6. The seventh shift stage "7th" with a gear ratio "0.709" is established by engagement of the first clutch C1, the fourth clutch C4, the fifth clutch C5, and the sixth clutch C6. The eighth shift stage "8th" with a gear ratio "0.610" is established by engagement of the first clutch C1, the third clutch C3, the fifth clutch C5, and the sixth clutch C6. The reverse shift stage "R" with a gear ratio "4.340" is established by engagement of the second clutch C2, the fourth clutch C4, the fifth clutch C5, and the sixth clutch C6. A neutral state is established by releasing all the clutches C.

In other words, in the automatic transmission 60, the first shift stage "1st" is established by release of the first clutch C1 and the fifth clutch C5. The second shift stage "2nd" is established by release of the first clutch C1 and the sixth clutch C6. The third shift stage "3rd" is established by release of the fifth clutch C5 and the sixth clutch C6. The fourth shift stage "4th" is established by release of the third clutch C3 and the sixth clutch C6. The fifth shift stage "5th" is established by release of the third clutch C3 and the fifth clutch C5. The sixth shift stage "6th" is established by release of the second clutch C2 and the fifth clutch C5. The seventh shift stage "7th" is established by release of the second clutch C2 and the third clutch C3. The eighth shift stage "8th" is established by release of the second clutch C2 and the fourth clutch C4. The reverse shift stage "R" is established by release of the first clutch C1 and the third clutch C3.

Therefore, in the automatic transmission 60, four clutches of the six clutches C1 to C6 are engaged and the remaining two clutches are released to selectively establish any of the eight forward shift stages from the first shift stage "1st" to the eighth shift stage "8th" and the reverse shift stage "R". In other words, the engagement elements involved with a shift of the automatic transmission 60 are all devices (clutches) engaged to inhibit relative rotation between the rotating elements and released to allow relative rotation between the rotating elements, do not include a device (brake) engaged to directly couple the rotating elements to the transmission case 28, and selectively establish all the multiple shift stages achievable in the automatic transmission 60, i.e., the eight forward shift stages from the first shift stage "1st" to the eighth shift stage "8th" and the reverse shift stage "R", depending on a combination of engagement and release of the six clutches C1 to C6.

As apparent from the engagement table of Fig. 14, a switchover of shift stages (single shift) in the automatic transmission 60 is performed by releasing one clutch of the four clutches engaged before the shift and engaging one clutch of the two clutches released before the shift. For example, the shift from the first shift stage to the second shift stage is performed by releasing the sixth clutch C6 and engaging the fifth clutch C5. Therefore, the automatic transmission 60 performs a so-called clutch-to-clutch shift by switching a pair of clutches to be gripped, for a switchover of all the shift stages except a skip shift at least in the forward shift stages.

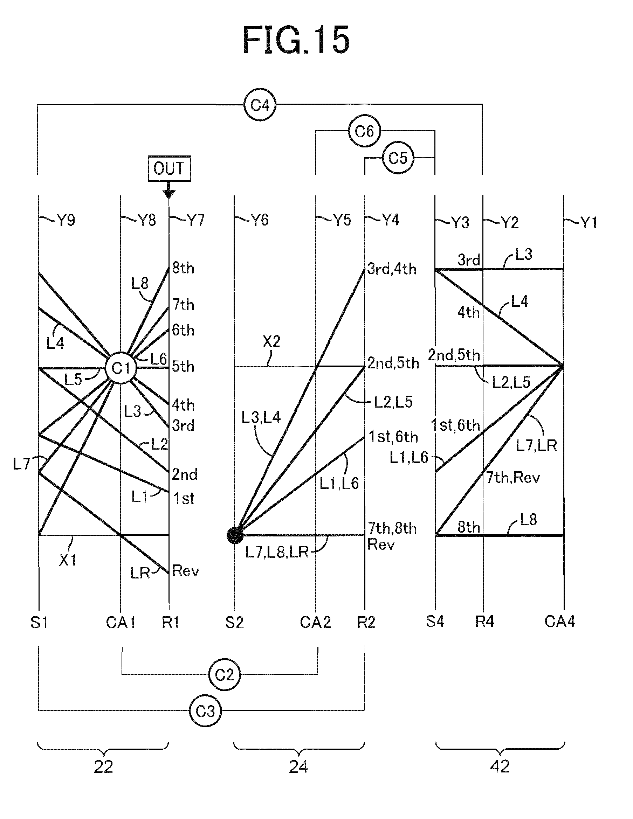

Fig. 15 is a collinear diagram capable of representing on straight lines relative relationships of rotation speeds of the rotating elements having a different coupling state for each shift stage in the automatic transmission 60. With regard to the nine vertical lines Y1 to Y9 in the collinear diagram of Fig. 15, from right to left, Y1, Y2, Y3, Y4, Y5, Y6, Y7, Y8, and Y9 indicate relative rotation speeds of the carrier CA4, the ring gear R4, the sun gear S4 of the third planetary gear device 42, the ring gear R2 , the carrier CA2, the sun gear S2 of the second planetary gear device 24, the ring gear R1, the carrier CA1, and the sun gear S1 of the first planetary gear device 22. The intervals between the vertical lines Y1 to Y9 are determined depending on the gear ratios ρ1, p2, and p3 of the planetary gear devices 22, 24, and 42. In particular, for respective sets of the vertical lines Y1 to Y3 corresponding to the three rotation elements in the third planetary gear device 42, the vertical lines Y4 to Y6 corresponding to the three rotation elements in the second planetary gear device 24, and the vertical lines Y7 to Y9 corresponding to the three rotation elements in the first planetary gear device 22, the interval corresponding to one is set between the sun gear S and the carrier CA, and the interval corresponding to p is set between the carrier CA and the ring gear R.

When the automatic transmission 60 is represented by using the collinear diagram of Fig. 15, the input shaft 12 is selectively coupled via the first clutch C1 to the carrier CA1. The carrier CA1 is selectively coupled via the second clutch C2 to the carrier CA2. The sun gear S1 is selectively coupled via the third clutch C3 to the ring gear R2 and is selectively coupled via the fourth clutch C4 to the ring gear R4. The ring gear R2 is selectively coupled via the fifth clutch C5 to the sun gear S4. The carrier CA2 is selectively coupled via the sixth clutch C6 to the sun gear S4. The ring gear R1 is coupled to the output gear 14 acting as the output rotating element.

As depicted in Fig. 15, in the automatic transmission 60, the rotation speed of the output gear 14 at the first shift stage "1st" is indicated by an intersection between the straight line L1 defined when the second clutch C2, the third clutch C3, the fourth clutch C4, and the sixth clutch C6 are engaged and the vertical line Y7 indicative of the rotation speed of the ring gear R1 coupled to the output gear 14 that is the output rotating element. The rotation speed of the output gear 14 at the second shift stage "2nd" is indicated by an intersection between the straight line L2 defined when the second clutch C2, the third clutch C3, the fourth clutch C4, and the fifth clutch C5 are engaged and the vertical line Y7. The rotation speed of the output gear 14 at the third shift stage "3rd" is indicated by an intersection between the straight line L3 defined when the first clutch C 1, the second clutch C2, the third clutch C3, and the fourth clutch C4 are engaged and the vertical line Y7. The rotation speed of the output gear 14 at the fourth shift stage "4th" is indicated by an intersection between the straight line L4 defined when the first clutch C1, the second clutch C2, the fourth clutch C4, and the fifth clutch C5 are engaged and the vertical line Y7. The rotation speed of the output gear 14 at the fifth shift stage "5th" is indicated by an intersection between the straight line L5 defined when the first clutch C1, the second clutch C2, the fourth clutch C4, and the sixth clutch C6 are engaged and the vertical line Y7. The rotation speed of the output gear 14 at the sixth shift stage "6th" is indicated by an intersection between the straight line L6 defined when the first clutch C1, the third clutch C3, the fourth clutch C4, and the sixth clutch C6 are engaged and the vertical line Y7. The rotation speed of the output gear 14 at the seventh shift stage "7th" is indicated by an intersection between the straight line L7 defined when the first clutch C1, the fourth clutch C4, the fifth clutch C5, and the sixth clutch C6 are engaged and the vertical line Y7. The rotation speed of the output gear 14 at the eighth shift stage "8th" is indicated by an intersection between the straight line L8 defined when the first clutch C1, the third clutch C3, the fifth clutch C5, and the sixth clutch C6 are engaged and the vertical line Y7. The rotation speed of the output gear 14 at the reverse shift stage "R" is indicated by an intersection between the straight line LR defined when the second clutch C2, the fourth clutch C4, the fifth clutch C5, and the sixth clutch C6 are engaged and the vertical line Y7.

### Sixth Embodiment

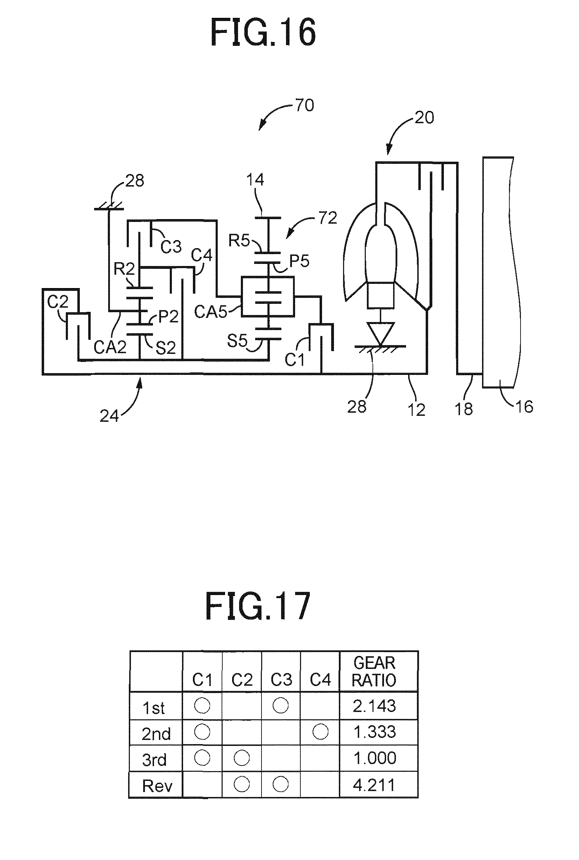

Fig. 16 is a schematic for explaining a configuration of a vehicle automatic transmission 70 that is yet another embodiment of the present invention. As indicated in Fig. 16, the automatic transmission 70 of this embodiment is made up of a double pinion type first planetary gear device 72 having the predetermined gear ratio ρ1, the single pinion type second planetary gear device 24 having the predetermined gear ratio p2 disposed on a common center axis in the transmission case 28. The first planetary gear device 72 includes a sun gear S5, a plurality of pairs of pinion gears P5 meshed with each other, a carrier CA5 supporting the pinion gears P5 in a rotatable and revolvable manner, and a ring gear R5 meshed with the sun gear S5 via the pinion gears P5 as rotating elements (rotating members). The sun gear S5 of the first planetary gear device 72 and the sun gear S2 of the second planetary gear device 24 are coupled to each other. The carrier CA2 of the second planetary gear device 24 is the transmission case 28 that is the non-rotating member. The ring gear R5 of the first planetary gear device 72 is coupled to the output gear 14 that is the output rotating element.

The automatic transmission 70 is disposed with the clutches C1 to C5 between the multiple rotating elements. In particular, the first clutch C1 selectively coupling the input shaft 12 and the carrier CA5 is disposed between the input shaft 12 that is the input rotating element and the carrier CA5 of the first planetary gear device 72. The second clutch C2 selectively coupling the sun gear S5 (S2) and the input shaft 12 is disposed between the sun gear S5 of the first planetary gear device 72/the sun gear S2 of the second planetary gear device 24 coupled to each other and the input shaft 12. The third clutch C3 selectively coupling the carrier CA5 and the ring gear R2 is disposed between the carrier CA5 of the first planetary gear device 72 and the ring gear R2 of the second planetary gear device 24. The fourth clutch C4 selectively coupling the sun gear S5 (S2) and the ring gear R2 is disposed between the sun gear S5 of the first planetary gear device 72/the sun gear S2 of the second planetary gear device 24 coupled to each other and the ring gear R2 of the second planetary gear device 24.

Fig. 17 is an operation table for explaining an operation state of engagement elements when a plurality of shift stages is selectively established in the automatic transmission 70. As depicted in Fig. 17, in the automatic transmission 70, the first shift stage "1st" with a gear ratio "2.143" is established by engagement of the first clutch C1 and the third clutch C3. The second shift stage "2nd" with a gear ratio "1.333" is established by engagement of the first clutch C1 and the fourth clutch C4. The third shift stage "3rd" with a gear ratio "1.000" is established by engagement of the first clutch C1 and the second clutch C2. The reverse shift stage "R" with a gear ratio "4.211" is established by engagement of the second clutch C2 and the third clutch C3. A neutral state is established by releasing all the clutches C.

In other words, in the automatic transmission 70, the first shift stage "1st" is established by release of the second clutch C2 and the fourth clutch C4. The second shift stage "2nd" is established by release of the second clutch C2 and the third clutch C3. The third shift stage "3rd" is established by release of the third clutch C3 and the fourth clutch C4. The reverse shift stage "R" is established by release of the first clutch C1 and the fourth clutch C4.

Therefore, in the automatic transmission 70, two clutches of the four clutches C1 to C4 are engaged and the remaining two clutches are released to selectively establish any of the three forward shift stages from the first shift stage "1st" to the third shift stage "3rd" and the reverse shift stage "R". In other words, the engagement elements involved with a shift of the automatic transmission 70 are all devices (clutches) engaged to inhibit relative rotation between the rotating elements and released to allow relative rotation between the rotating elements, do not include a device (brake) engaged to directly couple the rotating elements to the transmission case 28, and selectively establish all the multiple shift stages achievable in the automatic transmission 70, i.e., the third forward shift stages from the first shift stage "1st" to the third shift stage "3rd" and the reverse shift stage "R", depending on a combination of engagement and release of the four clutches C1 to C4.

As apparent from the engagement table of Fig. 17, a switchover of shift stages (single shift) in the automatic transmission 70 is performed by releasing one clutch of the two clutches engaged before the shift and engaging one clutch of the two clutches released before the shift. For example, the shift from the first shift stage to the second shift stage is performed by releasing the third clutch C3 and engaging the fourth clutch C4. Therefore, the automatic transmission 70 performs a so-called clutch-to-clutch shift by switching a pair of clutches to be gripped, for a switchover of all the shift stages except a skip shift at least in the forward shift stages.

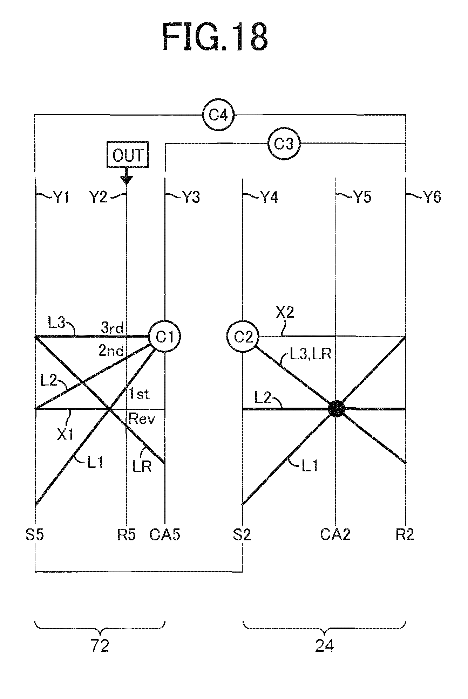

Fig. 18 is a collinear diagram capable of representing on straight lines relative relationships of rotation speeds of the rotating elements having a different coupling state for each shift stage in the automatic transmission 70. With regard to the nine vertical lines Y1 to Y6 in the collinear diagram of Fig. 18, from right to left, Y1, Y2, Y3, Y4, Y5, and Y6 indicate relative rotation speeds of the sun gear S5, the ring gear R5, the carrier CA5 of the first planetary gear device 72, the sun gear S2, the carrier CA2, the ring gear R2 of the second planetary gear device 24. The intervals between the vertical lines Y1 to Y6 are determined depending on the gear ratios ρ1 and ρ2 of the planetary gear devices 72 and 24. In particular, for respective sets of the vertical lines Y1 to Y3 corresponding to the three rotation elements in the first planetary gear device 72, the vertical lines Y4 to Y6 corresponding to the three rotation elements in the second planetary gear device 24, the interval corresponding to one is set between the sun gear S and the carrier CA, and the interval corresponding to p is set between the carrier CA and the ring gear R.

When the automatic transmission 70 is represented by using the collinear diagram of Fig. 18, the carrier CA5 is selectively coupled via the first clutch C1 to the input shaft 12 that is the input rotating element, and is selectively coupled via the third clutch C3 to the ring gear R2. The sun gear S5 and the sun gear S2 coupled to each other are selectively coupled via the second clutch C2 to the input shaft 12 and are selectively coupled via the fourth clutch C4 to the ring gear R2. The carrier CA2 is coupled to the transmission case 28 that is the non-rotating member. The ring gear R5 is coupled to the output gear 14 acting as the output rotating element.

As depicted in Fig. 18, in the automatic transmission 70, the rotation speed of the output gear 14 at the first shift stage "1st" is indicated by an intersection between the straight line L1 defined when the first clutch C1 and the third clutch C3 are engaged and the vertical line Y2 indicative of the rotation speed of the ring gear R5 coupled to the output gear 14 that is the output rotating element. The rotation speed of the output gear 14 at the second shift stage "2nd" is indicated by an intersection between the straight line L2 defined when the first clutch C1 and the fourth clutch C4 are engaged and the vertical line Y2. The rotation speed of the output gear 14 at the third shift stage "3rd" is indicated by an intersection between the straight line L3 defined when the first clutch C 1 and the second clutch C2 are engaged and the vertical line Y2. The rotation speed of the output gear 14 at the reverse shift stage "R" is indicated by an intersection between the straight line LR defined when the second clutch C2 and the third clutch C3 are engaged and the vertical line Y2.

As described above, according to the automatic transmission 10 of the first embodiment, the automatic transmission 30 of the second embodiment, the automatic transmission 40 of the third embodiment, the automatic transmission 50 of the fourth embodiment, the automatic transmission 60 of the fifth embodiment, and the automatic transmission 70 of the sixth embodiment, since the plurality of the clutches C does not include those engaged to directly couple the rotating elements to the transmission case 28 and selectively establishes all the multiple shift stages achievable in the automatic transmission 10 etc. depending on a combination of engagement and release of the plurality of the clutches C, it is not necessary to form a brake groove on the inner circumferential side of the transmission case 28 and the automatic transmission 10 etc. can be manufactured by simple processing. Therefore, the automatic transmission 10 etc. can be provided that can simplify the processing in the manufacturing stage.

According to the automatic transmission 10 of the first embodiment, the automatic transmission 30 of the second embodiment, the automatic transmission 40 of the third embodiment, the automatic transmission 50 of the fourth embodiment, the automatic transmission 60 of the fifth embodiment, and the automatic transmission 70 of the sixth embodiment, since each of the multiple shift stages is established by release of two clutches C of the plurality of the clutches C, the processing in the manufacturing stage can be simplified and the clutches C released at the time of establishment of the shift stages can be reduced as small as possible to suppress dragging.

According to the automatic transmission 10 of the first embodiment, the automatic transmission 30 of the second embodiment, the automatic transmission 40 of the third embodiment, the automatic transmission 50 of the fourth embodiment, the automatic transmission 60 of the fifth embodiment, and the automatic transmission 70 of the sixth embodiment, since the shift stages are switched by engaging one clutch C of the two clutches C and releasing one clutch C other than the two clutches C, the automatic transmission 10 etc. in a practical form performing a so-called clutch-to-clutch shift can be manufactured by simple processing.

According to the automatic transmission 10 of the first embodiment, the automatic transmission 30 of the second embodiment, the automatic transmission 40 of the third embodiment, the automatic transmission 50 of the fourth embodiment, and the automatic transmission 60 of the fifth embodiment, the three planetary gear devices 22, 24, and 26 (or 42) and the six clutches C are included; the plurality of the rotating elements is configured to include the sun gears S, the carriers CA, and the ring gears R of the three respective planetary gear devices 22 etc.; each of the multiple shift stages is established by engaging four clutches C of the six clutches C and releasing the remaining two clutches C; and, therefore, the automatic transmission 10 etc. in a practical form can be manufactured by simple processing.

According to the automatic transmission 10 of the first embodiment and the automatic transmission 60 of the fifth embodiment, since a plurality of the planetary gear devices 22 etc. is included and the sun gears S, the carriers CA, and the ring gears R of the planetary gear devices 22 etc. independently make up the respective rotating elements, the automatic transmission 10 etc. in a practical form can be manufactured by simple processing.

The automatic transmission 10 of the first embodiment includes the first planetary gear device 22, the second planetary gear device 24, and the third planetary gear device 26 that are all of the single pinion type, the input shaft 12 acting as the input rotating element coupled to the sun gear S2 of the second planetary gear device 24, the first clutch C1 selectively coupling the ring gear R1 of the first planetary gear device 22 to the ring gear R2 of the second planetary gear device 24, the second clutch C2 selectively coupling the carrier CA1 of the first planetary gear device 22 to the ring gear R2 of the second planetary gear device 24, the third clutch C3 selectively coupling the ring gear R1 of the first planetary gear device 22 to the sun gear S3 of the third planetary gear device 26, the fourth clutch C4 selectively coupling the carrier CA1 of the first planetary gear device 22 to the carrier CA3 of the third planetary gear device 26, the fifth clutch C5 selectively coupling the carrier CA2 of the second planetary gear device 24 to the sun gear S3 of the third planetary gear device 26, the sixth clutch C6 selectively coupling the input shaft 12 to the carrier CA3 of the third planetary gear device 26, and the output gear 14 acting as the output rotating element coupled to the ring gear R3 of the third planetary gear device 26, and the sun gear S1 of the first planetary gear device 22 is coupled to the transmission case 28 and, therefore, the automatic transmission 10 in a practical form can be manufactured by simple processing.

The automatic transmission 30 of the second embodiment includes the first planetary gear device 22, the second planetary gear device 24, and the third planetary gear device 26 that are all of the single pinion type, the first clutch C1 selectively coupling the input shaft 12 acting as the input rotating element to the carrier CA2 of the second planetary gear device 24, the second clutch C2 selectively coupling the ring gear R1 of the first planetary gear device 22 to the sun gear S2 of the second planetary gear device 24 and the carrier CA3 of the third planetary gear device 26 coupled to each other, the third clutch C3 selectively coupling the carrier CA1 of the first planetary gear device 22 to the carrier CA2 of the second planetary gear device 24, the fourth clutch C4 selectively coupling the ring gear R1 of the first planetary gear device 22 to the ring gear R3 of the third planetary gear device 26, the fifth clutch C5 selectively coupling the carrier CA1 of the first planetary gear device 22 to the ring gear R3 of the third planetary gear device 26, the sixth clutch C6 selectively coupling the input shaft 12 to the sun gear S3 of the third planetary gear device 26, and the output gear 14 acting as the output rotating element coupled to the ring gear R2 of the second planetary gear device 24, and the sun gear S1 of the first planetary gear device 22 is coupled to the transmission case 28 and, therefore, the automatic transmission 30 in a practical form can be manufactured by simple processing.

The automatic transmission 40 of the third embodiment includes the first planetary gear device 22 of the single pinion type, the second planetary gear device 24 of the single pinion type, and the third planetary gear device 42 of the double pinion type, the first clutch C1 selectively coupling the input shaft 12 acting as the input rotating element to the carrier CA1 of the first planetary gear device 22, the second clutch C2 selectively coupling the carrier CA1 of the first planetary gear device 22 to the ring gear R4 of the third planetary gear device 42, the third clutch C3 selectively coupling the ring gear R2 of the second planetary gear device 24 to the ring gear R4 of the third planetary gear device 42, the fourth clutch C4 selectively coupling the ring gear R2 of the second planetary gear device 24 to the sun gear S4 of the third planetary gear device 42, the fifth clutch C5 selectively coupling the sun gear S1 of the first planetary gear device 22 and the carrier CA2 of the second planetary gear device 24 coupled to each other to the sun gear S4 of the third planetary gear device 42, the sixth clutch C6 selectively coupling the input shaft 12 to the sun gear S2 of the second planetary gear device 24, and the output gear 14 acting as the output rotating element coupled to the ring gear R1 of the first planetary gear device 22, and the carrier CA4 of the third planetary gear device 42 is coupled to the transmission case 28 and, therefore, the automatic transmission 42 in a practical form can be manufactured by simple processing.

The automatic transmission 50 of the fourth embodiment includes the first planetary gear device 22 of the single pinion type, the second planetary gear device 24 of the single pinion type, and the third planetary gear device 42 of the double pinion type, the first clutch C1 selectively coupling the input shaft 12 acting as the input rotating element to the carrier CA1 of the first planetary gear device 22, the second clutch C2 selectively coupling the carrier CA1 of the first planetary gear device 22 to the carrier CA2 of the second planetary gear device 24, the third clutch C3 selectively coupling the sun gear S1 of the first planetary gear device 22 and the ring gear R4 of the third planetary gear device 42 coupled to each other to the ring gear R2 of the second planetary gear device 24, the fourth clutch C4 selectively coupling the ring gear R2 of the second planetary gear device 24 to the sun gear S4 of the third planetary gear device 42, the fifth clutch C5 selectively coupling the carrier CA2 of the second planetary gear device 24 to the sun gear S4 of the third planetary gear device 42, the sixth clutch C6 selectively coupling the input shaft 12 to the carrier CA4 of the third planetary gear device 42, and the output gear 14 acting as the output rotating element coupled to the ring gear R1 of the first planetary gear device 22, and the sun gear S2 of the second planetary gear device 24 is coupled to the transmission case 28 and, therefore, the automatic transmission 50 in a practical form can be manufactured by simple processing.

The automatic transmission 60 of the fifth embodiment includes the first planetary gear device 22 of the single pinion type, the second planetary gear device 24 of the single pinion type, and the third planetary gear device 42 of the double pinion type, the first clutch C1 selectively coupling the input shaft 12 acting as the input rotating element to the carrier CA1 of the first planetary gear device 22, the second clutch C2 selectively coupling the carrier CA1 of the first planetary gear device 22 to the carrier CA2 of the second planetary gear device 24, the third clutch C3 selectively coupling the sun gear S1 of the first planetary gear device 22 to the ring gear R2 of the second planetary gear device 24, the fourth clutch C4 selectively coupling the sun gear S1 of the first planetary gear device 22 to the ring gear R4 of the third planetary gear device 42, the fifth clutch C5 selectively coupling the ring gear R2 of the second planetary gear device 24 to the sun gear S4 of the third planetary gear device 42, the sixth clutch C6 selectively coupling the carrier CA2 of the second planetary gear device 24 to the sun gear S4 of the third planetary gear device 42, and the output gear 14 acting as the output rotating element coupled to the ring gear R1 of the first planetary gear device 22, and the sun gear S2 of the second planetary gear device 24 is coupled to the transmission case 28 and, therefore, the automatic transmission 60 in a practical form can be manufactured by simple processing.

The automatic transmission 70 of the sixth embodiment includes the first planetary gear device 72 of the double pinion type and the second planetary gear device 24 of the single pinion type, the first clutch C1 selectively coupling the input shaft 12 acting as the input rotating element to the carrier CA5 of the first planetary gear device 72, the second clutch C2 selectively coupling the input shaft 12 to the sun gear S5 of the first planetary gear device 72 and the sun gear S2 of the second planetary gear device 24 coupled to each other, the third clutch C3 selectively coupling the carrier CA5 of the first planetary gear device 72 to the ring gear R2 of the second planetary gear device 24, the fourth clutch C4 selectively coupling the sun gear S5 of the first planetary gear device 72 and the sun gear S2 of the second planetary gear device 24 coupled to each other to the ring gear R2 of the second planetary gear device 24, and the output gear 14 acting as the output rotating element coupled to the ring gear R5 of the first planetary gear device 72, and the carrier CA2 of the second planetary gear device 24 is coupled to the transmission case 28 and, therefore, the automatic transmission 70 in a practical form can be manufactured by simple processing.

According to the automatic transmission 10 of the first embodiment, the automatic transmission 30 of the second embodiment, the automatic transmission 50 of the fourth embodiment, and the automatic transmission 60 of the fifth embodiment, since the three planetary gear devices 22, 24, and 26 (or 42) have the gear ratios ρ1, p2, and p3 equal to each other, the planetary gear devices 22 etc. used in the vehicle automatic transmissions 10 etc. can be standardized and the gear ratios in a practical form can be realized in terms of the gear ratios of the shift stages.

Although the preferred embodiments of the present invention have been described in detail with reference to the drawings, the present invention is not limited thereto and is implemented with various modifications applied within a range not departing from the spirit thereof.

### NOMENCLATURE OF ELEMENTS

10, 30, 40, 50, 60, 70: vehicle automatic transmission 12: input shaft (input rotating element) 14: output gear (output rotating element) 16: engine 18: crankshaft 20: torque converter 22, 72: first planetary gear device 24: second planetary gear device 26, 42: third planetary gear device 28: transmission case C1: first clutch C2: second clutch C3: third clutch C4: fourth clutch C5: fifth clutch C6: sixth clutch CA1, CA2, CA3, CA4, CA5: carriers (rotating elements) P1, P2, P3, P4, P5: pinion gear R1, R2, R3, R4, R5: ring gears (rotating elements) S1, S2, S3, S4, S5: sun gears (rotating elements)

## Claims

1. A vehicle automatic transmission comprising: a plurality of rotating elements disposed rotatably relative to a transmission case; and a plurality of clutches each disposed between two rotating elements of the plurality of the rotating elements to be engaged to inhibit relative rotation between the two rotating elements and released to allow relative rotation between the two rotating elements, wherein
the plurality of the clutches does not include those engaged to directly couple the rotating elements to the transmission case and selectively establishes all multiple shift stages achieved in the automatic transmission depending on a combination of engagement and release of the plurality of the clutches.

2. The vehicle automatic transmission of claim 1, wherein each of the multiple shift stages is established by releasing two clutches of the plurality of the clutches.

3. The vehicle automatic transmission of claim 2, wherein the shift stages are switched by engaging one clutch of the two clutches and releasing one clutch other than the two clutches.

4. The vehicle automatic transmission of claim 2 or 3, comprising three planetary gear devices and the six clutches, wherein
the plurality of the rotating elements is configured to include sun gears, carriers, and ring gears of the three respective planetary gear devices, and wherein
each of the multiple shift stages is established by engaging four clutches of the six clutches and releasing the remaining two clutches.

5. The vehicle automatic transmission of claim 4, comprising
a first planetary gear device, a second planetary gear device, and a third planetary gear device that are all of a single pinion type,
a first clutch selectively coupling an input rotating element to the carrier of the second planetary gear device,
a second clutch selectively coupling the ring gear of the first planetary gear device to the sun gear of the second planetary gear device and the carrier of the third planetary gear device coupled to each other,
a third clutch selectively coupling the carrier of the first planetary gear device to the carrier of the second planetary gear device,
a fourth clutch selectively coupling the ring gear of the first planetary gear device to the ring gear of the third planetary gear device,
a fifth clutch selectively coupling the carrier of the first planetary gear device to the ring gear of the third planetary gear device,
a sixth clutch selectively coupling the input rotating element to the sun gear of the third planetary gear device, and
an output rotation element coupled to the ring gear of the second planetary gear device, and wherein
the sun gear of the first planetary gear device is coupled to the transmission case.

6. The vehicle automatic transmission of claim 4, comprising
a first planetary gear device of a single pinion type, a second planetary gear device of the single pinion type, and a third planetary gear device of a double pinion type,
a first clutch selectively coupling an input rotating element to the carrier of the first planetary gear device,
a second clutch selectively coupling the carrier of the first planetary gear device to the ring gear of the third planetary gear device,
a third clutch selectively coupling the ring gear of the second planetary gear device to the ring gear of the third planetary gear device,
a fourth clutch selectively coupling the ring gear of the second planetary gear device to the sun gear of the third planetary gear device,
a fifth clutch selectively coupling the sun gear of the first planetary gear device and the carrier of the second planetary gear device coupled to each other to the sun gear of the third planetary gear device,
a sixth clutch selectively coupling the input rotating element to the sun gear of the second planetary gear device, and
an output rotating element coupled to the ring gear of the first planetary gear device, and wherein
the carrier of the third planetary gear device is coupled to the transmission case.

7. The vehicle automatic transmission of claim 4, comprising
a first planetary gear device of a single pinion type, a second planetary gear device of the single pinion type, and a third planetary gear device of a double pinion type,
a first clutch selectively coupling an input rotating element to the carrier of the first planetary gear device,
a second clutch selectively coupling the carrier of the first planetary gear device to the carrier of the second planetary gear device,
a third clutch selectively coupling the sun gear of the first planetary gear device and the ring gear of the third planetary gear device coupled to each other to the ring gear of the second planetary gear device,
a fourth clutch selectively coupling the ring gear of the second planetary gear device to the sun gear of the third planetary gear device,
a fifth clutch selectively coupling the carrier of the second planetary gear device to the sun gear of the third planetary gear device,
a sixth clutch selectively coupling the input rotating element to the carrier of the third planetary gear device, and
an output rotating element coupled to the ring gear of the first planetary gear device, and wherein
the sun gear of the second planetary gear device is coupled to the transmission case.

8. The vehicle automatic transmission of claim 1, comprising a plurality of planetary gear devices, and wherein sun gears, carriers, and ring gears of the planetary gear devices independently make up the respective rotating elements.

9. The vehicle automatic transmission of claim 4 or 8, comprising
a first planetary gear device, a second planetary gear device, and a third planetary gear device that are all of a single pinion type,
an input rotating element coupled to the sun gear of the second planetary gear device,
a first clutch selectively coupling the ring gear of the first planetary gear device to the ring gear of the second planetary gear device,
a second clutch selectively coupling the carrier of the first planetary gear device to the ring gear of the second planetary gear device,
a third clutch selectively coupling the ring gear of the first planetary gear device to the sun gear of the third planetary gear device,
a fourth clutch selectively coupling the carrier of the first planetary gear device to the carrier of the third planetary gear device,
a fifth clutch selectively coupling the carrier of the second planetary gear device to the sun gear of the third planetary gear device,
a sixth clutch selectively coupling the input rotating element to the carrier of the third planetary gear device, and
an output rotating element coupled to the ring gear of the third planetary gear device, and wherein
the sun gear of the first planetary gear device is coupled to the transmission case.

10. The vehicle automatic transmission of claim 4 or 8, comprising
a first planetary gear device of a single pinion type, a second planetary gear device of the single pinion type, and a third planetary gear device of a double pinion type,
a first clutch selectively coupling an input rotating element to the carrier of the first planetary gear device,
a second clutch selectively coupling the carrier of the first planetary gear device to the carrier of the second planetary gear device,
a third clutch selectively coupling the sun gear of the first planetary gear device to the ring gear of the second planetary gear device,
a fourth clutch selectively coupling the sun gear of the first planetary gear device to the ring gear of the third planetary gear device,
a fifth clutch selectively coupling the ring gear of the second planetary gear device to the sun gear of the third planetary gear device,
a sixth clutch selectively coupling the carrier of the second planetary gear device to the sun gear of the third planetary gear device, and
an output rotating element coupled to the ring gear of the first planetary gear device, and wherein
the sun gear of the second planetary gear device is coupled to the transmission case.

11. The vehicle automatic transmission of claim 1, comprising
a first planetary gear device of a double pinion type and a second planetary gear device of a single pinion type,
a first clutch selectively coupling an input rotating element to a carrier of the first planetary gear device,
a second clutch selectively coupling the input rotating element to a sun gear of the first planetary gear device and a sun gear of the second planetary gear device coupled to each other,
a third clutch selectively coupling the carrier of the first planetary gear device to a ring gear of the second planetary gear device,
a fourth clutch selectively coupling the sun gear of the first planetary gear device and the sun gear of the second planetary gear device coupled to each other to the ring gear of the second planetary gear device, and
an output rotating element coupled to a ring gear of the first planetary gear device, and wherein
a carrier of the second planetary gear device is coupled to the transmission case.
